# FASCICULE DE BREVET EUROPEEN

(11) **EP 3 309 756 B1**
(45) Date de publication et mention de la délivrance du brevet: **30.12.2020**
(21) Numéro de dépôt: 16306364.7
(22) Date de dépôt: 14.10.2016
(51) Int. Cl.: G07C 9/15

(54) **PROCÉDÉ DE CONTRÔLE DE L'UNICITÉ DE PASSAGE, SYSTÈME DE CONTRÔLE DE L'UNICITÉ DE PASSAGE PERMETTANT LA MISE EN OEUVRE DUDIT PROCÉDÉ ET DISPOSITIF DE PORTE OU COULOIR ÉQUIPÉ D'UN TEL SYSTÈME**
EINZELPASSAGE-KONTROLLVERFAHREN UND -KONTROLLSYSTEM, DAS EINE UMSETZUNG DIESES VERFAHRENS ERMÖGLICHT, SOWIE VORRICHTUNG FÜR TÜR ODER KORRIDOR, DIE MIT EINEM SOLCHEN SYSTEM AUSGESTATTET IST
METHOD FOR MONITORING THE UNIQUENESS OF PASSAGE, SYSTEM FOR MONITORING THE UNIQUENESS OF PASSAGE MAKING IT POSSIBLE TO IMPLEMENT SAID METHOD, AND DOOR OR CORRIDOR DEVICE PROVIDED WITH SUCH A SYSTEM

(43) Date de publication de la demande: 18.04.2018
(73) Titulaire: FICHET TECHNOLOGIES, 67600 Baldenheim (FR)
(72) Inventeur: De Bonnieres, Jean-François, 67460 SOUFFELWEYERSHEIM (FR); Heinrich, Jonathan, 67390 SCHWOBSHEIM (FR)
(74) Mandataire: Cabinet Nuss

(56) Documents cités:
- WO-A1-2009/086928
- WO-A1-2012/042043
- FR-A1- 2 882 178
- JP-A- 2000 065 535
- US-A1- 2005 061 979
- US-A1- 2007 194 917

## Description

La présente invention concerne le domaine de la sécurité et du contrôle de l'unicité de passage dans ou à travers une zone de passage, telle qu'une ouverture de porte ou un couloir, notamment dans un bâtiment ou édifice et a pour objet un procédé de contrôle de l'unicité de passage, ainsi qu'un système de contrôle de l'unicité de passage permettant la mise en œuvre dudit procédé et une zone de passage à contrôler équipée d'un tel système.

Le contrôle de l'unicité de passage permet de vérifier qu'une seule personne autorisée entre dans une zone ou un local protégé.

Certains bâtiments tels que les banques, les aéroports, les installations militaires nécessitent un accès sécurisé permettant de garantir l'unicité de passage d'une personne afin d'empêcher tout passage d'une personne non autorisée.

Les portes de contrôle de ce type utilisées à ce jour permettent de satisfaire de manière correcte aux exigences habituelles, à savoir de détecter la présence d'une ou de plusieurs personnes.

La surveillance de certaines portes est réalisée par des cellules infrarouges émettrices. Toutefois, ces dernières doivent être situées dans un endroit sécurisé. De ce fait, il est n'est pas possible d'intégrer ces dernières à l'extérieur de la zone à sécuriser, par exemple à l'extérieur du bâtiment, car cela les expose à un risque de vandalisme ou de tentative de destruction trop élevé.

De plus, lesdites cellules doivent être disposées du côté opposé à celui de l'ouverture de la porte pour ne pas être aveuglées par cette dernière, en d'autres termes, de telle sorte que la porte ne forme pas un obstacle aux rayons émis ou reçus par lesdites cellules.

Ces deux conditions rendent très contraignante l'implantation d'un dispositif de détermination de l'unicité de passage.

Pour remédier à cet inconvénient, il a été proposé, par le document US-A-2002/176607, une porte de contrôle de l'unicité de passage donnant accès à un espace comprenant un premier moyen et un second moyen de surveillance reliés à un dispositif de gestion, lesdits moyens de surveillance étant invisibles en position de fermeture de la porte de contrôle.

Toutefois, les moyens de surveillance divulgués dans ce document US-A-2002/176607 ne sont pas non visibles et non accessibles en position de fermeture de la porte. En effet, ces moyens de surveillance sont disposés dans le plafond et donc forcément accessibles, au moins depuis l'intérieur du bâtiment dans lequel est intégrée la porte. De plus, ce document ne prévoit pas que ces moyens soient non visibles lorsque la porte est fermée.

Pour remédier à ces inconvénients, le document EP 2 171 694 a pour objet une porte de contrôle de l'unicité de passage donnant accès à un espace, comprenant un premier moyen de surveillance et un second moyen de surveillance reliés à un dispositif de gestion pour la mise en œuvre du procédé, caractérisée en ce que lesdits premier et second moyens de surveillance sont invisibles en position de fermeture de ladite porte de contrôle.

Toutefois, la porte de contrôle du document EP 2 171 694 délimite le passage en une pluralité de zones : une zone de surveillance et des zones interdites, de sorte que le traitement de l'unicité n'est réalisé que dans la zone de surveillance, les autres zones ne devant pas être traversées, ce qui oblige les personnes à passer à un certain endroit dans l'ouverture de la porte. Autrement dit, avec une telle porte de contrôle, si une personne seule et autorisée passe dans une zone de passage interdite, elle est automatiquement rejetée malgré l'unicité du passage. D'autre part, les moyens de contrôle de l'unicité du passage d'une telle porte de contrôle, qui prennent en compte la configuration et/ou le temps d'ouverture de la porte, ne peuvent pas être appliqués dans un autre espace sans porte tel que par exemple un couloir ou un espace avec une porte maintenue ouverte. En outre, dans une telle porte, qui traite uniquement des informations d'occultation des faisceaux infrarouges, le nombre d'informations disponibles est limité et impose à l'utilisateur une certaine façon de passer, par exemple en tenant un sac contre lui, de passer rapidement ou encore de ne pas balancer les bras.

Le document WO2009/086928A1 a pour objet un procédé de détection pour garantir l'unicité de passage d'un sujet dans une porte d'accès qui consiste à utiliser un émetteur prévu pour émettre un signal infra-rouge modulé en direction du sujet et un récepteur prévu pour recevoir au moins une partie dudit signal infrarouge réfléchi par le sujet et son environnement et des moyens informatiques de détection de l'unicité de passage ou non du sujet par analyse du signal infrarouge reçu. Les moyens de détection peuvent être disposés sensiblement latéralement à la direction de passage pour détecter deux sujets l'un derrière l'autre. Il comprend une rangée verticale de cellules émettrices infrarouge et une rangée verticale de cellules réceptrices infrarouge disposées en regard de la première rangée.

Le document WO2012/042043A1 concerne un système et un procédé pour individualiser le passage de personnes à travers une porte, c'est-à-dire pour empêcher le passage de plusieurs personnes à travers la porte au même moment et qui offre une meilleure sécurité que les systèmes connus. Il comprend à cet effet notamment les étapes de procédé suivantes : balayage d'un plan par un laser et réception par un capteur de lumière du laser réfléchi par une personne dans le plan et mesure d'une distance par rapport à l'objet nommé en fonction du temps de réception dudit laser déterminé, dans lequel une unité d'évaluation détermine, sur la base d'un profil de hauteur variant dans le temps et dans l'espace de ladite personne dans les plans balayés, si plusieurs personnes utilisent la porte en même temps pour empêcher au moins l'accès simultané de plusieurs personnes.

Le document FR2882178A1 concerne un dispositif de détection de passage d'individus ou d'objets traversant un plan délimité par deux montants verticaux. Le dispositif comprend des moyens aptes à reconstituer un volume par des capteurs de distance, à savoir deux séries de capteurs de mesure de distance disposés verticalement sur deux montants respectifs, des moyens pour recueillir simultanément à intervalles datés les distances évaluées par chacun des capteurs et des moyens pour reconstituer, à partir de ces valeurs de distances, une représentation 2D dans le plan des montants de la silhouette ou de l'objet ayant interrompu les faisceau de capteurs. La présente invention a pour but de pallier au moins un des inconvénients précités en proposant un procédé de contrôle de l'unicité de passage, un système de contrôle de l'unicité de passage permettant la mise en œuvre dudit procédé et un dispositif de zone de passage équipé d'un tel système de contrôle, permettant à l'utilisateur de passer n'importe où dans le passage en vue du contrôle de l'unicité de passage, c'est-à-dire qu'il n'y a plus de zones de passage interdites même à une seule personne autorisée, et pouvant être appliqué dans n'importe quel passage ou espace tel qu'une ouverture de porte ou un couloir sans porte ou un couloir avec une porte maintenue ouverte, tout en pouvant disposer d'un grand nombre d'informations permettant de s'affranchir des obligations ou contraintes de passer selon une certaine façon.

A cet effet, le procédé de contrôle de l'unicité de passage d'au moins une cible dans ou à travers une zone de passage à contrôler, telle qu'une ouverture de porte ou un passage de couloir, dans un bâtiment ou édifice, consiste, à partir d'un système de contrôle de l'unicité de passage comprenant, d'une part, deux ensembles de mesure disposés en vis-à-vis de chaque côté de ladite zone de passage en travers de cette dernière, à savoir un premier ensemble de mesure et un deuxième ensemble de mesure, comprenant chacun au moins un appareil de mesure de distance apte et destiné à émettre, dans ladite zone de passage et à une hauteur déterminée, un rayonnement électromagnétique, par exemple un rayonnement infrarouge, et de détecter ledit rayonnement renvoyé par la cible, le ou chaque appareil du premier ensemble de mesure étant orienté de sorte à émettre un rayonnement vers le deuxième ensemble de mesure et, d'autre part, un dispositif de gestion électronique apte et destiné à traiter les informations de mesure de distance provenant du ou de chaque appareil en vue de définir un résultat de succès ou d'échec d'unicité de passage, et des moyens de restitution, par exemple visuelle ou sonore, dudit résultat déterminé par ledit dispositif de gestion électronique,
à déclencher, les étapes de contrôle de l'unicité de passage suivantes :
- dans une étape de mesure de distance :
   à émettre dans ladite zone de passage, à l'aide du ou de chaque appareil, un rayonnement électromagnétique selon un train d'impulsions de fréquence déterminée,
   à détecter, au moyen du ou chaque appareil, le rayonnement électromagnétique émis par ce dernier et réfléchi par un point de la cible pour mesurer une distance entre ledit appareil et la cible et en déduire une information de mesure de distance,
- dans une étape de transmission de l'information de mesure de distance :
   à chaque impulsion ou paquet d'impulsions, à transmettre au dispositif de gestion électronique, la ou les informations de mesure de distance,
- dans une étape de traitement de la ou des informations de mesure de distance et de restitution du résultat de succès ou d'échec d'unicité de passage :
   à analyser et traiter, à l'aide du dispositif de gestion électronique, la ou les informations de mesure de distance pour définir un ou des profils de passage de la ou des cibles, puis à déterminer, sur la base du ou desdits profils de passage, si le passage est conforme et unitaire ou non et à restituer, à l'aide du moyen de restitution, le résultat de succès ou d'échec d'unicité de passage.

Un tel procédé se caractérise essentiellement en ce qu'il consiste, dans l'étape de détection, à effectuer les mesures de distance sur deux côtés opposés de la cible concernée,
et en ce qu'il consiste, à partir, d'une part, du au moins un appareil du premier ensemble de mesure, dit premier appareil, situé en vis-à-vis, sensiblement à la même hauteur et/ou dans le même axe de rayonnement que le ou l'un des appareils, dit deuxième appareil, du deuxième ensemble de mesure et, d'autre part, d'une valeur de distance prédéterminée correspondant à la distance entre lesdits premier et deuxième appareils, selon l'équation ci-après, ladite valeur de distance et ladite équation étant stockées dans une mémoire du dispositif de gestion,
- dans l'étape de détection : à mesurer simultanément, à l'aide du premier appareil, une première valeur de distance D1, formant une première information de mesure de distance, entre celui-ci et un premier point de la cible et, à l'aide du deuxième appareil, une deuxième valeur de distance D2, formant une deuxième information de mesure de distance, entre ce dernier et un deuxième point de la cible situé sur le côté de la cible opposé au premier point,
- dans l'étape de transmission de l'information de mesure de distance : à transmettre lesdites première et deuxième informations de mesure de distance au dispositif de gestion,
- dans l'étape de traitement : à calculer, à partir desdites informations de mesure de distance, la valeur de l'épaisseur E dans l'équation E = D - (D1 + D2) formant une information de l'épaisseur de la cible, puis à déterminer, à partir des information de mesure de distance et d'épaisseur de la cible ainsi calculées, si le passage est conforme et unitaire ou non.

Le système de contrôle de l'unicité de passage, selon la présente invention, d'au moins une cible dans ou à travers une zone de passage à contrôler, telle qu'une ouverture de porte ou un passage de couloir, dans un bâtiment ou édifice, ledit système permettant la mise en œuvre du procédé selon la présente invention, comprend :
- deux ensembles de mesure disposés en vis-à-vis de chaque côté de ladite zone de passage en travers de cette dernière, à savoir un premier ensemble de mesure et un deuxième ensemble de mesure, comprenant chacun au moins un appareil de mesure de distance capable d'émettre, dans ladite zone de passage et à une hauteur déterminée, un rayonnement électromagnétique, par exemple un rayonnement infrarouge selon un train d'impulsions de fréquence déterminée et de détecter ledit rayonnement renvoyé par la cible, pour en déduire une information de mesure de distance entre ledit appareil et ladite cible, le ou chaque appareil du premier ensemble de mesure étant orienté de sorte à pouvoir émettre le rayonnement vers le deuxième ensemble,
- au moins un dispositif de gestion électronique apte et destiné à traiter les informations de mesure de distance provenant du ou de chaque appareil en vue de déterminer le résultat de succès ou d'échec d'unicité de passage,
- des moyens de restitution, par exemple visuelle et/ou sonore, dudit résultat de succès ou d'échec d'unicité de passage,
- des moyens d'alimentation en énergie,
- un dispositif de fixation pour positionner fonctionnellement ledit système dans la zone de passage à couvrir,
- le cas échéant, éventuellement, un dispositif de contrôle d'accès
et se caractérise essentiellement en ce que le ou au moins l'un des appareils du premier ensemble de mesure, dit premier appareil, étant situé sensiblement à la même hauteur que et/ou dans l'axe de rayonnement que/de le ou l'un des appareils, dit deuxième appareil, du deuxième ensemble de mesure
et en ce que le dispositif de gestion comprend des instructions de calcul selon l'équation E = D - (D1 + D2) où
E représente la valeur de l'épaisseur,
D représente la valeur de la distance mesurée entre le premier appareil et le deuxième appareil, ladite valeur de distance D étant stockée dans le dispositif de gestion préalablement au déclenchement des étapes de contrôle de l'unicité de passage,
D1 représente une première valeur de distance mesurée entre le premier appareil et un premier point de la cible sur ladite ligne, à une hauteur déterminée,
D2 représente une deuxième valeur de distance mesurée entre le deuxième appareil et un deuxième point de la cible situé sur ladite ligne et sur le côté de la cible opposé au premier point,
le dispositif de gestion permettant de déterminer, à partir des informations de mesure de distance et d'épaisseur de la cible ainsi calculées, si le passage est conforme et unitaire ou non,
en ce que le ou chaque appareil consiste en un télémètre laser ou une caméra, de préférence une caméra temps de vol
et/ou en ce que le dispositif de gestion comprend au moins une carte de gestion électronique reliée fonctionnellement au ou à au moins l'un des ensembles de mesure et au moins une mémoire intégrée dans ladite carte de gestion ou reliée fonctionnellement à cette dernière, la ou au moins l'une desdites mémoires stockant des instructions de traitement et/ou des paramètres de fonctionnement et/ou des fichiers de fonctionnement et/ou les informations de mesure de distance ou autres données à traiter en vue de définir ledit résultat.

La présente invention a également pour objet un dispositif de zone de passage équipé d'un système de contrôle de l'unicité de passage, ledit dispositif comprenant une zone de passage à contrôler telle qu'une ouverture de porte ou un passage de couloir, dans un bâtiment ou édifice, caractérisé en ce que ledit système de contrôle de l'unicité de passage permet de contrôler l'unicité de passage dans ladite zone de passage et consiste en un système de contrôle selon la présente invention .

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
- la figure 1 montre une vue schématique d'un système de contrôle de l'unicité de passage équipant un dispositif de zone de passage dont la zone de passage est formée par l'ouverture d'une porte, avec un ensemble de mesure comprenant trois appareils de mesure de distance situés à trois hauteurs différentes, basse, intermédiaire et haute, et un ensemble de fixation associé fixé sur l'un des côtés verticaux de la porte et comprenant un profilé support et un profilé équipement orientable angulairement et mobile en translation axiale dans ledit profilé support,
- la figure 2 montre le dispositif de zone de passage représenté sur la figure 1 équipé d'un système de contrôle de l'unicité de passage comprenant deux ensembles de mesures disposés en vis-à-vis de chaque côté du passage ou de l'ouverture de la porte,
- la figure 3 montre le système représenté sur la figure 1, avec une représentation schématique de la cible traversant les rayonnements, et, en correspondance avec ladite représentation, un diagramme schématique et un diagramme de mesures faisant apparaître le profil de la cible détecté, c'est-à-dire, le profil des deux jambes de la cible détectées par l'appareil bas, le torse détecté par l'appareil intermédiaire et la tête ou le haut du corps détectée par l'appareil haut,

- la figure 4 montre une vue en perspective d'un ensemble de fixation du dispositif de fixation selon la présente invention, à l'état démonté permettant la fixation de l'ensemble de mesure associé dans la zone de passage formée par l'ouverture d'une porte,
- la figure 5 montre un détail A du dispositif de fixation représenté sur la figure 4 faisant apparaitre la bande lumineuse dans le logement du profilé support au niveau de son extrémité haute,
- la figure 6 montre une vue en coupe transversale de l'ensemble de mesure et de l'ensemble de fixation associé à l'état monté du système représenté sur la figure 4 et au niveau de l'appareil intermédiaire et montrant deux orientations angulaire différentes du profilé équipement dans le profilé support le recevant,
- la figure 7 montre une vue en perspective de l'ensemble de mesure représenté sur la figure 1 à l'état de montage sur le profilé équipement de l'ensemble de fixation associé,
- la figure 8 montre une représentation graphique d'un train d'impulsions de rayonnement selon deux fréquences f1 et f2 successives différentes et émis par l'un des appareils du système représenté sur la figure 1,

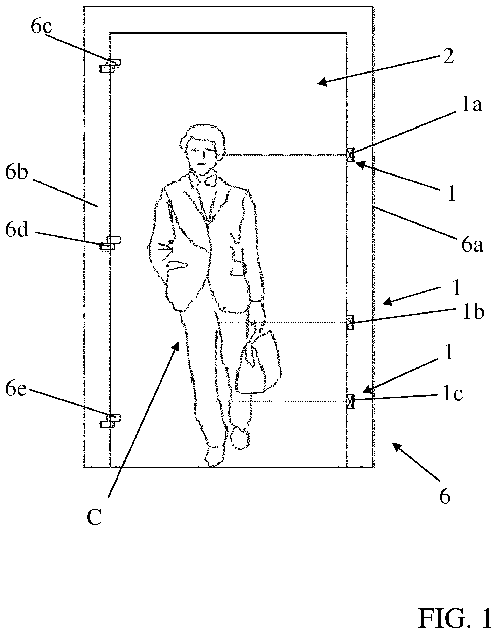

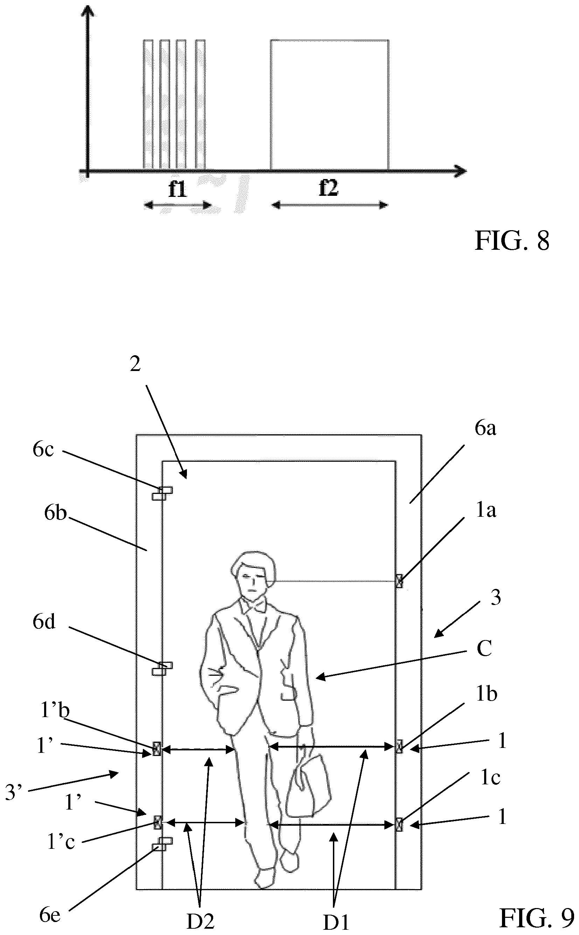

- la figure 9 montre le dispositif de zone de passage représenté sur la figure 1 équipé d'un système de contrôle de l'unicité de passage, selon la présente invention, comprenant deux ensembles de mesures disposés en vis-à-vis de chaque côté du passage, à savoir un premier ensemble de mesure situé sur le côté opposé au côté de la porte comportant les paumelles et un deuxième ensemble de mesure situé sur le côté opposé, et dont le deuxième ensemble comprend deux appareils de mesure de distance situés sensiblement à la même hauteur et dans l'axe de rayonnement respectivement de deux appareils de mesure de distance du premier ensemble qui en comprend trois,
- la figure 10 montre l'ensemble de mesure de la figure 7 avec un appareil de mesure de distance additionnel selon l'invention associé à l'un des appareils de mesure de distance en étant monté en opposition par rapport à ce dernier pour pouvoir déterminer en outre le sens de passage.

Le procédé de contrôle de l'unicité de passage d'au moins une cible dans ou à travers une zone de passage Z à contrôler, telle qu'une ouverture de porte ou un couloir dans un bâtiment ou édifice, consiste, à partir d'un système de contrôle de l'unicité de passage comprenant, d'une part, au moins deux ensembles de mesure 1 ou 1' comprenant chacun au moins un appareil la, 1b, 1c, 1d ou 1'a, 1'b, 1'c, 1'd de mesure de distance, dénommé par la suite appareil, apte et destiné à émettre, dans ladite zone de passage et à une hauteur déterminée, un rayonnement électromagnétique, par exemple un rayonnement infrarouge, et de détecter ledit rayonnement renvoyé ou réfléchi par la cible et, d'autre part, un dispositif de gestion 2 et/ou 2' électronique apte à recevoir et traiter les informations de mesure de distance provenant du ou de chaque appareils en vue de définir un résultat d'échec ou de succès d'unicité de passage et des moyens de restitution, par exemple visuelle ou sonore, dudit résultat déterminé par ledit dispositif de gestion électronique,
à déclencher, les étapes de contrôle de l'unicité de passage suivantes :
- dans une étape de mesure de distance :
   à émettre dans ladite zone, à l'aide du ou de chaque appareil la ou 1b ou 1c ou 1d ou 1'a ou 1'b ou 1'c ou 1'd, un rayonnement électromagnétique, par exemple dans le domaine de fréquence des infrarouges, selon un train d'impulsions de fréquence f1 et/ou f2 déterminée,
   à détecter, au moyen du ou chaque appareil la ou 1b ou 1c ou 1d ou 1'a ou 1'b ou 1'c ou1'd, le rayonnement électromagnétique émis par ce dernier et réfléchi ou renvoyé par un point de la cible C pour mesurer une distance entre ledit appareil et la cible C et en déduire une information de mesure de distance,
- dans une étape de transmission de l'information de mesure de distance :
   à chaque impulsion ou paquet d'impulsions, à envoyer, à l'aide du ou de chaque appareil, au dispositif de gestion électronique, la ou les informations de mesure de distance,
- dans une étape de traitement de la ou des informations de mesure de distance et de restitution du résultat de succès ou d'échec d'unicité de passage :
   à analyser et traiter, à l'aide du dispositif de traitement et de stockage, la ou les informations de mesure de distance pour définir un ou des profils de passage de la ou des cibles, puis à déterminer, sur la base du ou desdits profils de passage, si le passage est conforme et unitaire ou non et à restituer, à l'aide du moyen de restitution, le résultat de succès ou d'échec d'unicité de passage.

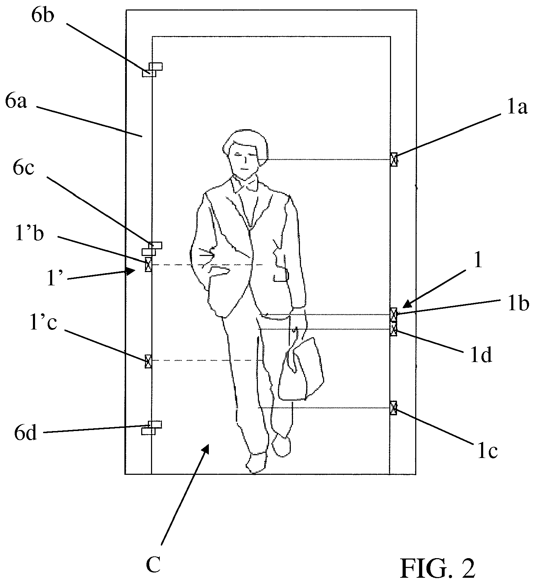

De préférence, le procédé peut consister, dans l'étape de mesure de distance, à effectuer des mesures de distance, sur au moins deux hauteurs différentes, de préférence trois ou quatre hauteurs différentes (figures 1, 2, 3, 4, 7, 9, 10).

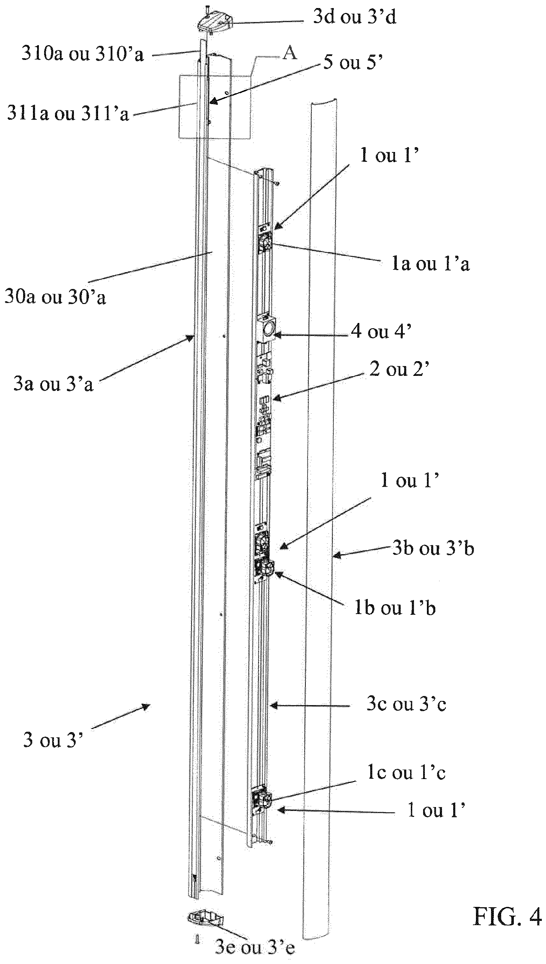

Comme on peut le voir sur la figure 9, le procédé selon la présente invention consiste, à partir de deux ensembles de mesures 1 et 1' en vis-à-vis, par exemple chacun dans une forme telle que représentée sur les figures 4, 6, 7 et 10, disposés de chaque côté de ladite zone de passage en travers de cette dernière, à savoir un premier ensemble de mesure 1 et un deuxième ensemble de mesure 1', le ou chaque appareil la ou 1b ou 1c ou 1d du premier ensemble de mesure 1 étant orienté de sorte à pouvoir émettre le rayonnement vers le deuxième ensemble de mesure 1' et étant situé soit sensiblement à la même hauteur et/ou dans l'axe de rayonnement que/de le ou l'un des appareils 1'a ou 1b' ou 1'c ou 1'd du deuxième ensemble de mesure 1' :
- dans l'étape de détection : à effectuer les mesures de distance sur deux côtés opposés de la cible concernée. De telles mesures sur deux côtés opposés de la cible permettent d'améliorer la définition de son profil en augmentant le nombre d'informations disponibles pour leur traitement.

Comme on peut le voir à la figure 9, le procédé selon la présente invention permet, à partir des mesures de distance effectuées sur les deux côtés opposés de la cible, de déterminer en outre des valeurs d'épaisseurs de la cible et consiste, à partir, d'une part, du premier ensemble de mesure 1 comprenant au moins un appareil la ou 1b ou 1c ou 1d, dit premier appareil, situé en vis-à-vis sensiblement à la même hauteur et/ou dans l'axe de rayonnement que/de l'appareil ou de l'un des autres appareils 1'a ou 1'b ou 1'c ou 1'd, dit deuxième appareil, du deuxième ensemble de mesure 1', c'est-à-dire émettant chacun un rayonnement électromagnétique en direction et dans l'axe de l'autre appareil en vis-à-vis, et, d'autre part, d'une valeur de distance D prédéterminée correspondant à la distance entre lesdits premier et deuxième appareils, selon l'équation ci-après, ladite valeur de distance D et ladite équation étant stockées dans une mémoire du dispositif de gestion 2 et/ou 2' que peut comprendre ce dernier :
- dans l'étape de détection : à mesurer simultanément, à l'aide du premier appareil la ou 1b ou 1c ou 1d, une première valeur de distance D1, formant une première information de mesure de distance, entre celui-ci et un premier point de la cible C et, à l'aide du deuxième appareil 1'a ou 1'b ou 1'c ou 1'd, une deuxième valeur de distance D2, formant une deuxième information de mesure de distance , entre ce dernier et un deuxième point de la cible C situé sur le côté de la cible C opposé au premier point,
- dans l'étape de transmission de l'information de mesure de distance : à transmettre lesdites première et deuxième informations de mesure de distance au dispositif de gestion 2 et/ou 2' électronique,
- dans l'étape de traitement : à calculer, à partir desdites informations de mesure de distance, la valeur de l'épaisseur E dans l'équation E = D - (D1 + D2) formant une information de l'épaisseur de la cible, puis à déterminer, à partir des information de mesure de distance et/ou d'épaisseur de la cible ainsi calculées, si le passage est conforme et unitaire ou non. On peut voir sur la figure 9, que le premier ensemble 1 peut comprendre, par exemple, trois appareils 1a et 1b et 1c, dont deux appareils 1b et 1c, surmontés par le troisième appareil la, peuvent former lesdits premiers appareils et peuvent être situés à la même hauteur respectivement que deux appareils l'b et l'c que peut comprendre, par exemple, le deuxième ensemble 1' et qui peuvent former lesdits deuxièmes appareils.

De préférence, dans une mise en œuvre ou une application dans une zone de passage formée par l'ouverture d'une porte, par exemple une porte comprenant un cadre dormant entourant ladite ouverture et sur lequel peut être montée par l'intermédiaire de paumelles 6c, 6d, 6e, le premier ensemble 1 peut être fixé ou intégré dans/sur l'un des côtés ou montants verticaux 6a du cadre dormant 6 opposé au côté ou montant vertical 6b, de préférence comportant les paumelles 6c de la porte, dudit cadre dormant 6 et le deuxième ensemble 1' en vis-à-vis peut être fixé ou intégré sur/dans ledit côté ou montant vertical 6b opposé, de préférence comportant les paumelles 6c.

Dans une première forme de réalisation d'une étape préalable à l'étape de détection, le procédé peut consister, dans ladite étape préalable, dans le cas d'une zone de passage consistant en une ouverture de porte, éventuellement une ouverture de porte de sas de sécurité,
- à déclencher les étapes de contrôle de l'unicité de passage lors de l'ouverture de la porte,
- à restituer le résultat de succès d'unicité uniquement lorsque la porte est fermée,
- dans le cas d'un échec d'unicité, à restituer le résultat soit une fois que la porte est fermée, soit avant sa fermeture.

Dans une deuxième forme de réalisation d'une étape préalable à l'étape de détection, le procédé peut consister, dans ladite étape préalable, dans le cas d'une zone de passage consistant en un couloir, éventuellement avec porte maintenue ouverte :
- préalablement à l'étape de détection et de mesures, dans une étape de contrôle d'accès, au moyen d'un dispositif de contrôle d'accès que peut comprendre en outre le système de contrôle de l'unicité de passage selon l'invention, à authentifier la cible,
- puis à traiter l'authentification pour envoyer une information de succès ou d'échec de l'authentification au système de contrôle de l'unicité de passage, puis :
   - en cas de succès, à déclencher les étapes de contrôle de l'unicité de passage,
   - en cas d'échec, à émettre une alarme sans déclencher les étapes de contrôle de l'unicité de passage.

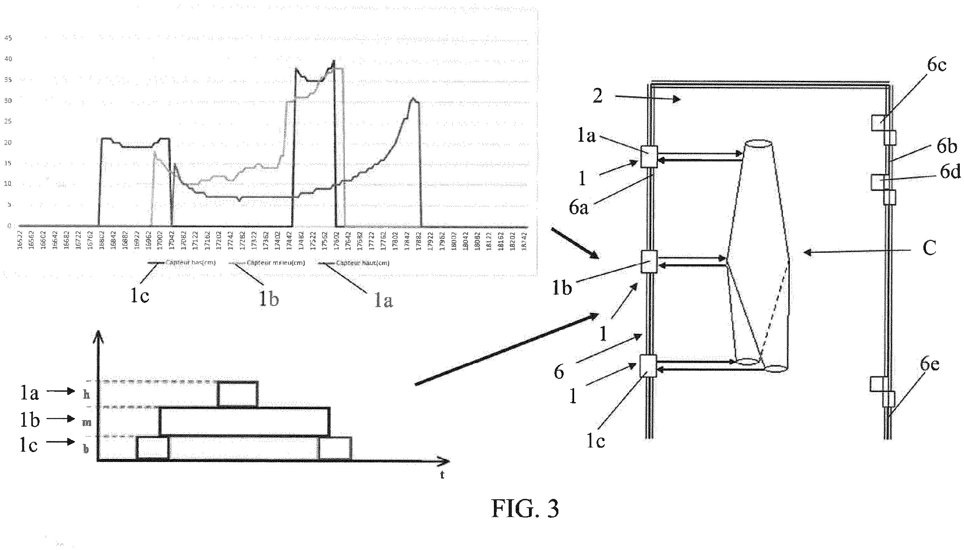

Par exemple, comme on peut le voir sur la figure 3, pour trois hauteurs différentes et pour une personne formant la cible, le procédé peut consister à effectuer des mesures de distance sur une hauteur basse située au niveau de ses jambes, une hauteur intermédiaire située au niveau du torse et une hauteur haute située au niveau de sa tête. Ainsi, il est possible de déterminer en temps réel à quelle distance se trouve au moins une partie de la cible, par exemple, pour le cas où il est prévu d'effectuer des mesures sur trois hauteurs différentes, (basse, intermédiaire et haute) à quelle distance se trouve les pieds, le corps et la tête de la personne lors de son passage à travers les rayonnements électromagnétiques émis par les appareils la et/ou 1b et/ou 1c et/ou 1d et/ou 1'a et/ou 1'b et/ou 1'c et/ou 1'd situés aux trois hauteurs différentes précitées, de préférence en étant alignés le long d'un axe verticale.

Le système de contrôle de l'unicité de passage, selon la présente invention, d'au moins une cible C dans ou à travers une zone de passage Z à contrôler, telle qu'une ouverture de porte ou un passage de couloir, dans un bâtiment ou édifice, ledit système permettant la mise en œuvre du procédé selon la présente invention, comprend :
- deux ensembles de mesure 1 ou 1' comprenant chacun au moins un appareil 1a ou 1b ou 1c ou 1d ou 1'a ou 1'b ou 1'c ou 1'd de mesure de distance capable d'émettre, dans ladite zone de passage et à une hauteur déterminée, un rayonnement électromagnétique, par exemple un rayonnement infrarouge, selon un train d'impulsions de fréquence, par exemple f1 et/ou f2, déterminée, et de détecter ledit rayonnement renvoyé par la cible C, pour en déduire une information de mesure de distance entre ledit appareil et ladite cible C,
- un dispositif de gestion 2 ou 2' électronique apte et destiné à traiter les informations de mesure de distance provenant du ou de chaque appareil en vue de déterminer le résultat de succès ou d'échec d'unicité de passage,
- des moyens d'alimentation en énergie (non représentés),
- des moyens de restitution 4 et/ou 4' par exemple visuelle et/ou sonore, dudit résultat de succès ou d'échec d'unicité de passage,
- un dispositif de fixation 3 et/ou 3' pour positionner fonctionnellement ledit système dans la zone de passage à couvrir,
- le cas échéant, éventuellement, un dispositif de contrôle d'accès.

Le ou chaque appareil 1a ou 1b ou 1c ou 1d ou 1'a ou 1'b ou 1'c ou 1'd peut ainsi être prévu pour être situé à une hauteur déterminée dans la zone de passage, de préférence sur l'un des côtés verticaux de ladite zone, et être apte et destiné à émettre, dans ladite zone un rayonnement électromagnétique et à détecter ledit rayonnement électromagnétique émis et réfléchi par un point de la cible C atteint par ledit rayonnement électromagnétique pour en déduire l'information de mesure de distance entre ledit appareil et la cible (figures 1, 2, 3, 4, 7, 9, 10).

Les moyens d'alimentation en énergie et/ou les moyens de restitution 4 et/ou la ou les unités de traitement 2 peuvent être embarqués avec le ou les appareils la et/ou 1b et/ou 1c et/ou 1'a et/ou 1'b et/ou 1'c dans un même support ou sur des supports différents.

De préférence, comme on peut le voir sur la figure 4, le système selon la présente invention, peut comprendre en outre au moins un haut-parleur 4 ou 4' pouvant être relié fonctionnellement à la ou l'une des cartes de gestion 2 ou 2'. De préférence le système peut comprendre, le cas échéant, un haut-parleur 4 ou 4' associé à chaque ensemble de mesure 1 ou 1', c'est-à-dire à chaque ou à au moins l'un desdits ensemble 1 ou 1'. Le ou chaque haut-parleur 4 ou 4' permet de communiquer ou restituer sous une forme sonore au moins le résultat de succès ou d'échec d'unicité de passage.

De préférence, comme nous le verrons par la suite, dans chaque ensemble de mesure 1 ou 1', le ou le appareils la, 1b, 1c, 1d ou 1'a, 1'b, 1'c, 1'd et/ou le ou la partie concernée du dispositif de gestion 2 ou 2' et/ou le haut-parleur 4 ou 4' ou autre moyen de restitution peuvent être pré-montés sur un support commun pour faciliter la livraison et l'installation du système (figures 4, 5, 6, 7, 10).

Le dispositif de contrôle d'accès permet de réaliser, le cas échéant, l'étape de contrôle d'accès précitée du procédé et d'authentifier la cible. Un tel dispositif de contrôle d'accès, non représenté, peut comprendre, par exemple, un lecteur de badge, un clavier ou encore un lecteur d'empreinte et une unité de traitement qui peut être, par exemple, le dispositif de gestion 2 et/ou 2', pour traiter l'authentification et envoyer une information de succès ou d'échec de l'authentification au système de contrôle d'unicité de passage.

D'autre part, les moyens d'alimentation en énergie peuvent être, par exemple, une alimentation du secteur ou une alimentation autonome.

Le dispositif de gestion 2 et/ou 2' peut comprendre au moins une carte de gestion 2 et/ou 2' électronique reliée fonctionnellement au ou à au moins l'un des ensembles de mesure 1 ou 1' et au moins une mémoire intégrée dans ladite carte de gestion ou reliée fonctionnellement à cette dernière. Dans ce dernier cas la mémoire peut être, par exemple, une mémoire d'une carte mémoire reliée fonctionnellement à la ou au moins l'une des cartes de gestion 2 ou 2'. Une telle carte mémoire peut, par exemple, être une carte mémoire connue sous le nom de « carte microSD » (« Micro Secure Digital Card »). De préférence, , la présente invention peut prévoir que chaque ensemble de mesure 1 ou 1' soit reliée fonctionnellement à sa propre carte de gestion 2 ou 2'.

La ou au moins l'une des mémoires du dispositif de gestion 2 et/ou 2' peut stocker les instructions de traitement et/ou des paramètres de fonctionnement et/ou des fichiers de fonctionnement et/ou les informations de mesure de distance ou autres données à traiter en vue de définir ou déterminer ledit résultat de succès ou d'échec d'unicité de passage. Par exemple, la présente invention peut prévoir au moins l'un des fichiers ou dossiers de fonctionnement suivants :
- un dossier de configuration contenant les derniers paramètres de configuration du système,
- un dossier de mesures dans lequel le dispositif de gestion 2 et/ou 2'enregistre les mesures (informations de mesure) déterminées par le ou chaque appareil tout au long du passage de la cible ainsi que le résultat de succès ou d'échec d'unicité de passage,
- un dossier de synthèse vocale dans lequel se trouvent les messages de la synthèse vocale, par exemple pour la restitution du résultat de l'unicité de passage.

De préférence, le ou chaque appareil 1a ou 1b ou 1c ou 1d ou 1'a ou 1'b ou 1'c ou 1'd peut consister en un télémètre laser ou une caméra, de préférence une caméra temps de vol.

On peut voir sur la figure 9 que le système selon la présente invention comprend deux ensembles de mesures 1 et 1' en vis-à-vis disposés de chaque côté de ladite zone de passage Z en travers de cette dernière, à savoir un premier ensemble de mesure 1 et un deuxième ensemble de mesure 1'. En outre, le ou chaque appareil la ou 1b ou 1c ou 1d du premier ensemble de mesure 1 est orienté de sorte à pouvoir émettre le rayonnement vers le deuxième ensemble 1'.

Pour permettre la réalisation de l'étape de détermination de l'épaisseur de la cible C selon le procédé selon la présente invention, comme on peut le voir sur la figure 9, le ou au moins l'un des appareils la ou 1b ou 1c ou 1d du premier ensemble de mesure 1, dit premier appareil, est situé sensiblement à la même hauteur et/ou dans le même axe de rayonnement que le ou l'un des appareils 1'a ou 1'b ou 1'c ou 1'd, dit deuxième appareil, du deuxième ensemble de mesure 1' et le dispositif de gestion 2 et/ou 2' électronique , comprend des instructions de calcul selon l'équation : $E = D - \left(D1+D2\right)$ où
E représente la valeur de l'épaisseur,
D représente la valeur de la distance mesurée entre le premier appareil la ou 1b ou 1c ou 1d et le deuxième appareil 1'a ou 1'b ou 1'c ou 1'd, ladite valeur de distance D étant stockée dans ledit dispositif de gestion, c'est-à-dire dans la ou l'une des mémoires de ce dernier, préalablement au déclenchement des étapes de contrôle de l'unicité de passage,
D1 représente une première valeur de distance mesurée entre le premier appareil (deux premiers appareils représentés sur la figure 9) et un premier point de la cible C sur ladite ligne, à une hauteur déterminée,
D2 représente une deuxième valeur de distance mesurée entre le deuxième appareil (deux deuxièmes appareils représentés sur la figure 9) et un deuxième point de la cible C situé sur ladite ligne et sur le côté de la cible C opposé au premier point. Ainsi, comme on peut le voir sur la figure 9, le premier ensemble de mesure 1 peut comprendre, par exemple, trois appareils 1a et 1b et 1c et 1e deuxième ensemble de mesure 1' peut comprendre, par exemple, deux appareils 1'b et 1'c situés respectivement sensiblement à la même hauteur et dans l'axe de rayonnement que les/de deux appareils 1b et 1c du premier ensemble de mesure 1.

Dans un mode de réalisation préférentiel, pour pouvoir effectuer, dans l'étape de mesure de distance, des mesures de distance et/ou d'épaisseur sur au moins deux hauteurs différentes, de préférence trois ou quatre hauteurs différentes, comme on peut le voir, notamment, sur la figure9 à partir de mesures de distance sur deux côtés opposés de la cible, les au moins deux ensembles de mesure 1 et 1' peuvent être disposés en vis-à-vis et peuvent comprendre chacun au moins deux appareils, de préférence trois ou quatre appareils la, 1b, 1c ou l'a, l'b, l'c, alignés successivement le long d'un axe vertical (figure 9) sur au moins deux hauteurs différentes, de préférence trois ou quatre hauteurs différentes et de sorte que lesdits appareils la et/ou 1b et/ou 1c d'un ensemble de mesure 1 soient situés en vis-à-vis, et le cas échéant sensiblement à la même hauteur, des appareils 1'a et/ou 1'b et/ou 1'c de l'autre ensemble de mesure 1'.

Le ou chaque appareil 1a ou 1b ou 1c ou 1'a ou 1'b ou 1'c peut comprendre un émetteur apte et destiné à émettre les impulsions de rayonnement électromagnétique, selon la fréquence, par exemple f1 et/ou f2 (figure 8), déterminée, et un capteur apte à recevoir le rayonnement électromagnétique réfléchi ou renvoyé par un point de la cible pour en déduire une information de mesure de distance entre ledit appareil et la cible au point considéré. Le ou chaque appareil 1a ou 1b ou 1c ou 1d 1'a ou 1'b ou 1'c 1'd peut être apte à transmettre l'information de mesure de distance au dispositif de gestion 2 ou 2' auquel il est relié fonctionnellement, par exemple, au moyen d'une connexion électrique filaire ou, à distance, par radiofréquence.

Si on se réfère aux figures 4, 5, 6, 7 et 10, on peut voir que, dans un mode de réalisation préférentiel, le dispositif de fixation 3 et/ou 3' peut comprendre au moins un ensemble de fixation 3 ou 3', le ou chaque ensemble de mesure 1 ou 1' étant associé au ou à un ensemble de fixation 3 ou 3' pour permettre sa fixation et son agencement. Le ou chaque ensemble de fixation 3 ou 3' peut comprendre un profilé, de préférence un profilé métallique, essentiellement droit, dit profilé support 3a ou 3'a, de préférence de section globalement en U, pouvant s'étendre longitudinalement le long d'un axe longitudinal. Un tel profilé support 3a ou 3'a peut comprendre un logement 30a ou 30'a, pouvant s'étendre le long dudit axe longitudinal, recevant le ou les appareils la et/ou 1b et/ou 1c et/ou 1'd, 'a et/ou 1'b et/ou 1'c et/ou 1'd de l'ensemble de mesure 1 ou 1' associé et, le cas échéant, la carte de gestion 2 ou 2' et/ou le haut-parleur 4 ou 4', fixé(e)s, de préférence, de manière amovible, dans le dit logement 30a ou 30'a. Le ou chaque haut-parleur 4 ou 4' ou autre moyen de restitution peut être fixé dans le ou l'un des ensembles de fixation 3 ou 3', de préférence, le cas échéant, entre la carte de gestion 2 ou 2' et le ou l'un des appareils 1a ou 1b ou 1c, 1'a ou 1'b ou 1'c fixés dans le même logement 30a ou 30'a.

La ou chaque carte de gestion 2 ou 2' peut être prévue pour être fixée soit dans le ou l'un des ensemble de fixation 3 ou 3', soit à distance du ou des ensembles de fixation 3 et/ou 3', par exemple dans une centrale d'alarme située dans la zone de passage, soit à distance de la zone de passage, par exemple dans une centrale d'alarme et/ou de contrôle située à distance de la zone de passage.

Chaque ensemble de mesure 1 ou 1' peut comprendre au moins deux appareils 1a, 1b, 1c, 1d ou 1'a, 1'b, 1'c, 1'd de préférence trois ou quatre appareils qui peuvent être alignés et espacés le long de l'axe longitudinal du profilé support 3a ou 3'a de l'ensemble de fixation 3 ou 3' associé. En outre, le cas échéant, la ou chaque carte de gestion 2 ou 2' peut être disposée entre deux appareils 1a, 1b, 1c, 1d ou 1'a, 1'b, 1'c, 1'd.

D'autre part, le logement 30a ou 30'a peut être fermé par un cache 3b ou 3'b, de préférence amovible, pouvant former l'une des faces longitudinales, dite face avant, du profilé et étant apte et destinée à laisser passer les ondes électromagnétiques émises par le ou les appareils 1a, 1b, 1c, 1d, 1'a, 1'b, 1'c, 1'd tout en masquant, notamment, ces derniers et, le cas échéant, la carte de gestion 2 ou 2' et/ou le moyen de restitution 4 ou 4'. Un tel cache 3b ou 3'b de fermeture, de préférence réalisé en polycarbonate, de préférence noir, peut être fixé sur le profilé support 3a ou 3'a par exemple par clipsage ou emboîtement élastique ou encliquetage. Le cache 3b ou 3'b de fermeture permet ainsi de ne pas faire apparaître l'emplacement des appareils et des autres éléments, notamment électroniques, équipant ledit profilé support 3a ou 3'a en les rendant invisible pour la cible.

On peut voir également sur la figure 4 que chaque ensemble de fixation 3 ou 3' peut comprendre en outre au moins deux embouts 3d, 3e ou 3'd, 3'e, de préférence en plastique, de préférence de couloir noir, fixés, par exemple par vissage, aux extrémités du profilé support 3a ou 3'a, ce de manière à fermer lesdites extrémités.

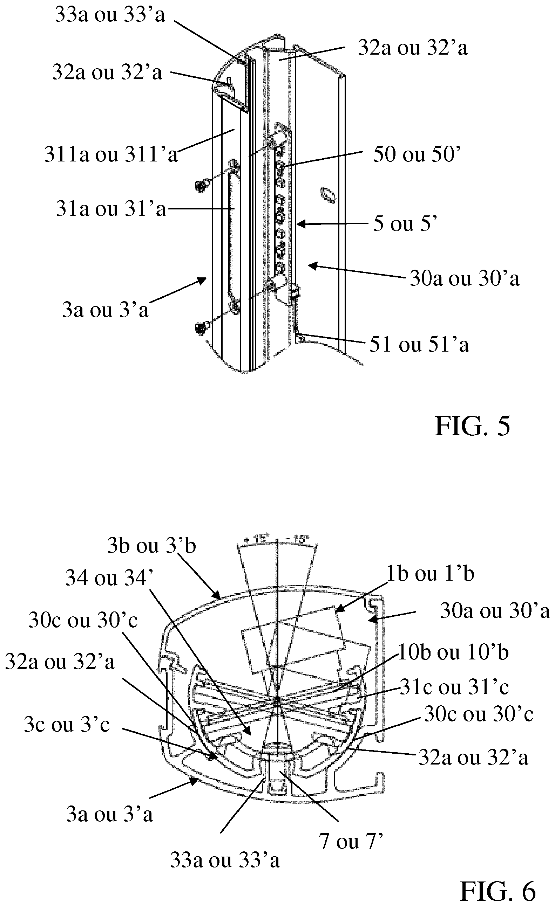

Le système peut comprendre en outre, comme on peut le voir sur les figures 4 et 5, au moins une bande lumineuse 5 ou 5' pouvant comporter une pluralité de diodes électroluminescentes 50 ou 50', connues sous la sigle : Leds, réparties sur une rangée, la ou au moins l'une desdites bandes lumineuse 5 ou 5' pouvant être fixée dans le logement 30a ou 30'a du profilé support 3a ou 3'a, de préférence entre, d'une part, l'une des extrémités du profilé support 3a ou 3'a et, d'autre part, la ou l'une des cartes de gestion 2 ou 2' et/ou le ou les appareils 1a, 1b, 1c, 1d, 1'a, 1'b, 1'c, 1'd. En outre, comme on peut le voir plus particulièrement sur la figure 5, le ou au moins l'un des profilés support 3'a ou 3'a peut comporter une ouverture 31a ou 31'a traversante, de préférence de forme oblongue et de préférence parallèle à l'axe longitudinal du profilé support 3a ou 3'a, située en regard de ladite bande lumineuse 5 ou 5' de sorte à permettre à la lumière émise par les Leds 50 ou 50' d'être diffusée à travers le profilé support 3a ou 3'a et vers l'extérieur par ladite ouverture 31a ou 31'a. De préférence, l'ouverture 31a ou 31'a peut être fermée par un cache 310a ou 310'a apte à fermer et laisser passer ou diffuser la lumière émise par lesdites Leds (figure 4) qui peut être fixé en étant inséré par coulissement dans une rainure 311a ou 311'a prévue à cet effet (figures 4 et 5). Une telle rainure 31 1a ou 311'a peut être pratiquée dans le profilé support 3a ou 3'a, de préférence parallèlement à son axe longitudinal, par exemple dans un côté adjacent à son fond. Une telle rainure 311a ou 311'a peut comporter un fond et deux bords longitudinaux parallèles et en vis-à-vis permettant de retenir le cache 310a ou 310'a entre ledit fond et ces derniers. La bande lumineuse 5 ou 5' peut être reliée électriquement par un câble 51 ou 51' à la ou l'une des cartes de gestion 2 ou 2' (figure 5). Une telle ouverture 31a ou 31'a peut être pratiquée dans le fond de la rainure 311a ou 311'a.

Si on se réfère aux figures 4, 6, 7 et 10, on peut voir qu'un tel ensemble de fixation 3 ou 3' peut comprendre en outre un profilé additionnel, dit profilé équipement 3c ou 3'c, essentiellement droit, de section transversale de préférence globalement en U, apte et destiné à être disposé dans le logement 30a ou 30'a du profilé support 3a ou 3'a pour former dans ce dernier un support amovible et/ou mobile permettant de supporter le ou l'un des ensembles de mesure 1 ou 1' et, le cas échéant, la carte de gestion 2 ou 2' et/ou le haut-parleur 4 ou 4' ou autre moyen de restitution, de préférence dans un logement 34 ou 34' que peut comprendre le profilé équipement 3c ou 3'c. Un tel logement peut s'étendre le long du profilé équipement 3c ou 3'c et peut être ouvert.

Un tel ensemble de fixation 3 ou 3', comme on peut le voir notamment sur la figure 6, peut comprendre en outre des moyens de déplacement par translation 30c, 32a ou 30'c, 32'a, pouvant consister par exemple en une liaison glissière, et/ou des moyens de déplacement angulairement, c'est-à-dire en pivotement ou en rotation, de préférence autour de l'axe longitudinal du profilé support, ce qui permet audit profilé équipement 3c ou 3'c d'être mobile, dans ledit logement 30a ou 30'a, respectivement en translation le long de l'axe longitudinal et/ou angulairement par rapport au profilé support 3a ou 3'a de sorte à pouvoir régler ou ajuster la position axiale des appareils la, 1b, 1c, l'a, l'b, l'c et leur orientation angulaire, notamment de leur axe d'émission du rayonnement électromagnétique. Ainsi, le profilé équipement 3c ou 3'c peut être placé et déplacé axialement, c'est-à-dire dans une position verticale en hauteur, et angulairement dans le dans le profilé support 3a ou 3'a, notamment dans le cas où il est nécessaire d'ajuster la position et l'orientation desdits appareils.

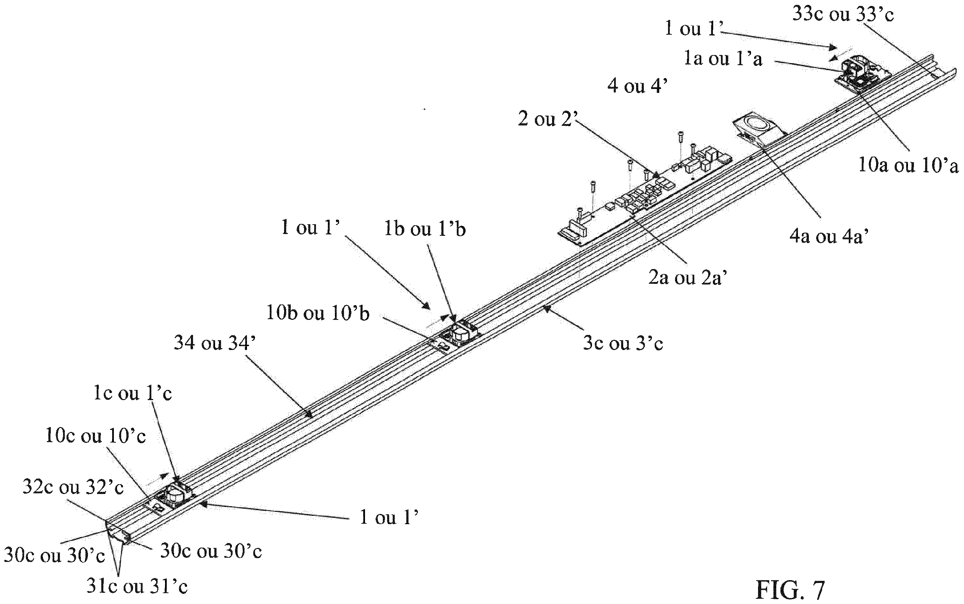

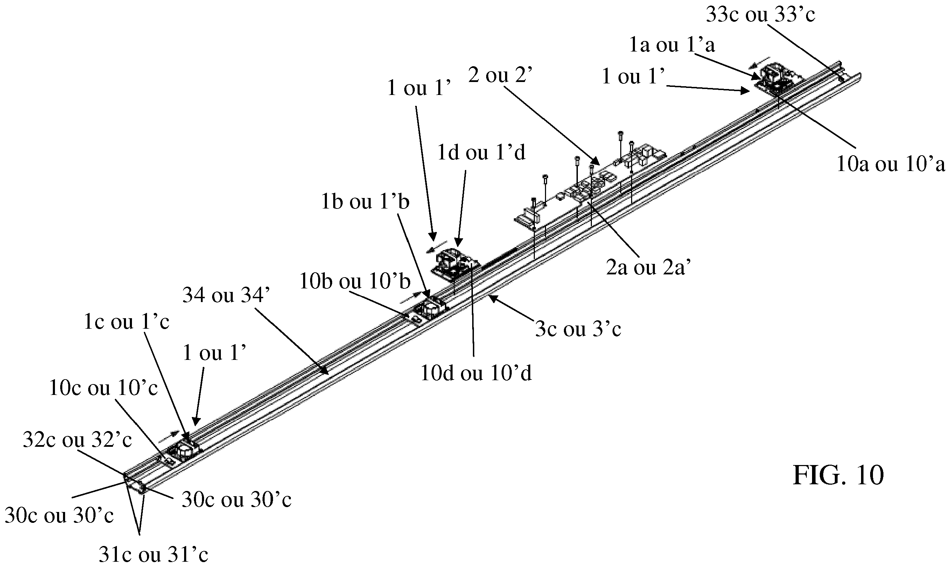

Un tel ensemble de fixation 3 ou 3' peut comprendre en outre des moyens de blocage 33a ou 33'a, 32c ou 32'c, 33c ou 33'c, 7 ou 7' permettant de bloquer et de maintenir en position le profilé équipement 3c ou 3'c après réglage de sa position en translation et/ou angulaire. De tels moyens de blocage peuvent consister en une rainure longitudinal 33a ou 33'a s'étendant dans le fond du profilé support 3a ou 3'a et en un ou plusieurs clips 7 venant se clipser ou s'encliqueter, par déformation élastique, dans la rainure longitudinal 33a ou 33'a en passant à travers une fente transversale 32c ou 32'c, 33c ou 33'c de blocage, de préférence de forme oblongue, pratiquée dans le fond du profilé équipement 3c ou 3'c (figures 6 et 7). De préférence, le profilé équipement peut comporter deux fentes transversales 32c ou 32'c, 33c ou 33'c de blocage, de préférence pratiquées non loin des extrémités dudit profilé équipement 3c ou 3'c (figures 7 et 10).

Si on se réfère plus particulièrement aux figures 5, 6, 7 et 10, on peut voir que les moyens de déplacement par translation 30c, 32a ou 30'c, 32'a peuvent constituer tout ou partie des moyens de déplacement angulairement. Par exemple, les moyens de déplacement par translation 30c, 32a ou 30'c, 32'a peuvent consister en deux faces de glissement 30c, 30'c et 32a, 32'a circulaires ou en arc de cercle, continues ou discontinues, en contact l'une contre l'autre pour permettre un glissement angulaire et un glissement en translation axiale essentiellement le long de l'axe longitudinal du profilé support 3a ou 3'a. L'une desdites faces 32a ou 32'a peut consister en une face interne du profilé support 3a ou 3'a qui peut être, par exemple, reliée au, et/ou intégrée dans, le fond dudit profilé support, tandis que l'autre face de glissement 30c ou 30'c peut consister en au moins une partie de la face externe du profilé équipement 3c ou 3'c qui peut comprendre à cet effet un fond au moins en partie en arc de cercle ou de forme circulaire.

On comprendra que le profilé support 3a ou 3'a peut être prévu pour être fixé sur une surface telle que par exemple une surface murale ou de porte, en formant ou en étant intégré ou fixé sur ou dans un montant ou côté ou traverse du cadre dormant de la porte, et peut alors être immobilisé sur ladite surface peu importe, le cas échéant, la position du profilé équipement 3c ou 3'c monté, de préférence de manière amovible et/ou avec déplacement en translation et/ou angulairement, dans ledit profilé support 3a ou 3'a.

Par ailleurs, la présente invention peut prévoir qu'au moins l'un des ensembles de mesure 1 ou 1' comprenne en outre au moins un appareil 1d ou 1'd de mesure, dit appareil additionnel, associé avec le ou au moins l'un des autres appareils la ou 1b ou 1c ou 1'a ou 1'b ou 1'c en étant alignés sur le même axe. Le ou chaque appareil 1d ou 1'd additionnel peut être monté en opposition, c'est-à-dire orienté sur ledit axe en étant tourné de 180° par rapport à l'appareil la ou 1b ou 1c ou 1'a ou 1'b ou 1'c associé afin de pouvoir effectuer ou connaître, par le traitement des signaux de détection provenant des deux appareils montés en opposition, par exemple en déterminant leur déphasage, un comptage du passage de la ou des cibles et/ou le sens du passage de la cible. On comprendra qu'un tel appareil additionnel 1d ou 1'd peut également être mis en œuvre pour réaliser des mesures de distance et/ou d'épaisseur en vue de déterminer le profil de la cible et le résultat de succès ou d'échec d'unicité de passage ;

Si on se réfère plus particulièrement aux figures 6, 7 et 10, on peut voir que le ou chaque appareil la ou 1b ou 1c ou 1'a ou 1'b ou 1'c, et, le cas échéant le ou chaque appareil 1d ou 1'd additionnel peut être monté coulissant individuellement dans le profilé support 3a ou 3'a (non représenté sur les figures annexées) ou, le cas échéant dans le profilé équipement 3c ou 3'c (figures 6, 7 et 10) grâce à des moyens de coulissement 10a, 10b, 10c, 10c, 10'a, 10'b, 10'c, 10'd, 31c ou 31'c, que peut comprendre en outre un tel ensemble de fixation 3 ou 3'. Les moyens de coulissement peuvent comprendre une liaison glissière comportant au moins une glissière 31c ou 31'c pratiquée longitudinalement dans le profilé support 3a ou 3'a ou le profilé équipement 3c ou 3'c et des coulisseaux 10a, 10b, 10c, 10'a, 10'b, 10'c que peut comprendre le ou chaque appareil la ou 1b ou 1c ou 1'a ou 1'b ou 1'c ou 1'd concerné. Le ou chaque appareil la ou 1b ou 1c ou 1'a ou 1'b ou 1'c peut comprendre une plaque support, de préférence rectangulaire, pouvant former, par exemple par deux de ses bords opposés et parallèles qu'elle peut comprendre, un tel coulisseau 10a ou 10b ou 10c ou 10d ou 10'a ou 10'b ou 10'c ou 10'd. La glissière 31c ou 31'c peut être constituée, par exemple, par des rainures, de préférence deux rainures en vis avis, pratiquées longitudinalement et parallèlement à son axe longitudinal dans la face interne du profilé support 3a ou 3'a ou du profilé équipement 3c ou 3'c, et dans la ou lesquelles rainures, peut coulisser la plaque support 10a, 10b, 10c, 10'a, 10'b, 10'c, par exemple ses deux bords opposés et parallèles que peut comprendre cette dernière, du ou de chaque appareil 1a ou 1b ou 1c ou 1d ou 1'a ou 1'b ou 1'c ou 1'd (figures 6, 7 et 10).

De même, la ou l'une des cartes de gestion 2 ou 2' et/ou le haut-parleur 4 ou 4' peuvent également être montés coulissant dans la glissière 31c ou 31'c. A cet effet, par exemple, le ou chaque haut-parleur 4 ou 4' ou autre moyen de restitution peut comporter un support 4a ou 4'a en forme de plaque, de préférence rectangulaire, formant, par exemple par deux de ses bords opposés parallèles qu'elle peut comprendre, un coulisseau et la ou chaque carte de gestion 2a ou 2'a de peut comporter une plaque support 2a ou 2'a, de préférence rectangulaire, formant, par exemple par deux de ses bords opposés parallèles qu'elle peut comprendre, un coulisseau (figures 4,7 et 10). La présente invention peut prévoir des moyens de blocage en position tels que, par exemple, des vis de pression venant bloquer et maintenir en position le ou chaque appareil la ou 1b ou 1c ou 1'a ou 1'b ou 1'c dans le profilé équipement et, le cas échéant, la carte de gestion 2 ou 2' et/ou le haut-parleur 4 ou 4'.

Ainsi, grâce aux moyens de déplacement et/ou d'orientation angulaire selon la présente invention, il est possible de régler la position, plus particulièrement la position en hauteur, et/ou l'orientation, individuelle de chaque appareil ou d'un groupe d'appareils montés dans le profilé équipement 3c ou 3'c, ainsi que les autres éléments constitutifs tels que la ou les cartes de gestion 2 et/ou 2' ou le ou les haut-parleurs 4 ou 4' ou autre moyen de restitution, ce qui permet de mettre en place un système de contrôle avec un fonctionnement précis et efficace et parfaitement adapté à la configuration de la zone de passage et/ou aux cibles à contrôler.

Enfin, la présente invention peut prévoir des moyens d'affichage, non représentés sur les figures annexées, par exemple un écran permettant d'afficher visuellement un ou des menus de configuration du système et des boutons, par exemple des boutons de navigation dans le ou les menus, de validation (accès dans ce ou ces derniers ou des sous-menus, paramètres divers de gestion et de programmation du système ou d'entrée de données dans le système...) ou d'annulation (retour au menu précédent, annulation de la modification d'un paramètre...). Par exemple, parmi les menus, la présente invention peut prévoir au moins l'un des menus suivants :
- un menu « distance et/ou épaisseurs» permettant d'afficher les distances et/ou épaisseurs mesurées par le ou les appareils après traitement par le dispositif de gestion 2 et/ou 2' des mesures brutes. Dans le cas où il n'y a pas de cible (personne ou objet) devant le ou l'un des appareils, la distance affichée est égale à zéro,
- un menu «résultat» qui permet d'afficher le résultat de la dernière analyse d'unicité de passage. Le résultat peut être exprimé en pourcentage (%). Si l'unicité de passage est validée, le résultat peut correspondre à la valeur 100 %. A l'inverse le résultat peut correspondre à la valeur 0%,
- le cas échéant, un menu « comptage » permettant d'afficher le nombre de passage, le cas échéant, le nombre de passage en sens d'entrée et en sens de sortie,
- un menu « diagnostic » permettant d'afficher différents points de contrôle afin d'afficher un éventuel problème de fonctionnement,
- un menu « date et heure » permettant de régler et d'afficher la date et l'heure,
- un menu « paramètres » permettant de régler les différents paramètres définissant le fonctionnement du système, par exemple à l'aide de sous-menus suivants :
   - un menu « mode » : fonctionnement en mode « porte » : une seule personne est autorisée à passer à chaque ouverture de porte ou en mode « flux continu » : les personnes sont autorisées à passer successivement devant le ou les appareils, avec un traitement de l'unicité de passage en continue,
   - un menu « valise » permettant d'autoriser un passage d'une personne avec une valise ou d'interdire ledit passage,
- un menu « passage » : permettant de définir et d'afficher la largeur de passage, par exemple en centimètres, sur laquelle le système va contrôler l'unicité de passage,
- un menu « côté » permettant d'indiquer de quel côté se trouve le système et notamment le ou chaque ensemble de mesure,
- un menu « seuil » permettant un réglage de la valeur seuil de l'unicité de passage, par exemple exprimée en pourcentage, par rapport à laquelle valeur seuil le dispositif de gestion 2 ou 2' va comparer le résultat de l'unicité de passage. Par exemple, un seuil de l'ordre de 80% à 90% permet de limiter les fausses alarmes tout en détectant correctement les fraudes ou passages non autorisés,
- un menu « impulsions » permettant de régler et d'afficher la durée des impulsions de rayonnement, de préférence pour chaque appareil, par exemple entre 0.2 et 2.5 secondes,
- un menu « résultat d'unicité de passage » permettant d'afficher si, en cas d'échec d'unicité, le résultat est donné immédiatement ou seulement après la fermeture de la porte ;

Bien entendu la présente invention n'est pas limitée à ces modes de paramétrage ou d'affichage. D'autres menus permettant d'afficher la durée maximale d'ouverture de la porte ou la durée maximale autorisée pour atteindre les rayonnement suite à détection de la validité d'un badge de reconnaissance, de régler et d'afficher des paramètres sonores concernant la signalisation sonore du résultat d'unicité.

La présente invention a également pour objet un dispositif de zone de passage équipé d'un système de contrôle de l'unicité de passage, ledit dispositif comprenant une zone de passage Z à contrôler telle qu'une ouverture de porte ou un passage de couloir, dans un bâtiment ou édifice. Un tel système de contrôle de l'unicité de passage permet de contrôler l'unicité de passage dans ladite zone de passage Z et consiste en un système de contrôle de l'unicité de passage selon la présente invention.

Dans un tel dispositif de zone de passage, selon la présente invention, où la zone de passage consiste en une ouverture de porte, par exemple une ouverture de porte pour sas de sécurité, ledit dispositif peut comprendre un cadre dormant 6 entourant ladite ouverture de porte et pouvant comprendre deux côtés opposés, à savoir un premier côté 6a et un second côté 6b, et un battant monté pivotant, par l'intermédiaire de paumelles 6c et 6d et 6e, sur le second côté et le ou chaque ensemble de fixation peut être fixé sur le premier ou second côté 6a ou 6b ou peut être intégré dans, ou former, ce dernier (figures 1, 2, 3, 9).

Dans un tel dispositif de zone de passage, le système de contrôle de l'unicité de passage peut comprendre deux ensembles de mesures 1 et 1', tels que définis plus haut, disposés en vis-à-vis de chaque côté de ladite zone de passage Z en travers de cette dernière. La présente invention permet ainsi à l'utilisateur de passer n'importe où dans le passage, c'est-à-dire qu'il n'y a plus de zones interdites comme dans les systèmes de l'art antérieur du type de celui divulgué dans le document précité EP 2 171 694. Le système selon la présente invention peut être utilisé ou appliqué dans n'importe quel passage ou espace tel qu'une ouverture de porte ou un couloir sans porte ou avec une porte maintenue ouverte, tout en pouvant disposer d'un plus grand nombre d'informations permettant de s'affranchir des obligations ou contraintes de passer selon une certaine façon. Autrement dit, avec une telle porte de contrôle du type du document EP 2 171 694, si une personne seule et autorisée passe dans la ou l'une des zones interdites, elle est automatiquement rejetée malgré l'unicité du passage, ce qui n'est pas possible avec la présente invention qui permet à la personne de passer n'importe où dans la zone de passage sans être rejetée ou interdite tout en obtenant un plus grande nombre d'information concernant la cible C.

Par exemple, un tel système, un tel procédé ou un tel dispositif de zone de passage, selon la présente invention, permet de détecter et de traiter, à partir de mesures de distance, différentes formes de passage d'une ou plusieurs cibles, notamment une ou deux personnes dont l'une seulement est autorisée, tels que :
- un passage effectué par une seule personne,
- un passage effectué à deux personnes dont l'une cache les appareils en se plaçant devant pendant que l'autre personne passe derrière ou dont les deux personnes franchissent les rayonnements émis par le ou les appareils en étant côte à côte et en essayant de synchroniser leur mouvement, une partie du corps de la personne cachée étant détectée par le ou lesdits appareils ne serait-ce qu'un bref instant par exemple sur une ou plusieurs impulsions de rayonnements,
- un passage effectué par une seule personne marchant lentement.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de contrôle de l'unicité de passage d'au moins une cible (C) dans ou à travers une zone de passage (Z) à contrôler, telle qu'une ouverture de porte ou un passage de couloir, dans un bâtiment ou édifice, consistant, à partir d'un système de contrôle de l'unicité de passage comprenant, d'une part, deux ensembles de mesure (1, 1') en vis-à-vis disposés de chaque côté de ladite zone de passage en travers de cette dernière, à savoir un premier ensemble de mesure (1) et un deuxième ensemble de mesure (1'), comprenant chacun au moins un appareil (1a, 1b, 1c, 1d, 1'a, 1'b, 1'c, 1'd) de mesure de distance apte et destiné à émettre, dans ladite zone de passage et à une hauteur déterminée, un rayonnement électromagnétique et de détecter ledit rayonnement renvoyé par la cible (C), le ou chaque appareil du premier ensemble de mesure (1) étant orienté de sorte à émettre un rayonnement vers le deuxième ensemble de mesure (1') et, d'autre part, un dispositif de gestion (2, 2') électronique apte et destiné à traiter les informations de mesure de distance provenant du ou de chaque appareil en vue de définir un résultat de succès ou d'échec d'unicité de passage et des moyens de restitution dudit résultat déterminé par ledit dispositif de gestion électronique,
à déclencher, les étapes de contrôle de l'unicité de passage suivantes :
- dans une étape de mesure de distance :
à émettre dans ladite zone de passage (Z), à l'aide du ou de chaque appareil (1a, 1b, 1c, 1d, 1'a, 1'b, 1'c, 1'd), un rayonnement électromagnétique selon un train d'impulsions de fréquence (f1, f2) déterminée,
à détecter, au moyen du ou chaque appareil (1a, 1b, 1c, 1d, 1'a, 1'b, 1'c, 1'd) le rayonnement électromagnétique émis par ce dernier et réfléchi par un point de la cible (C) pour mesurer une distance entre ledit appareil et la cible C et en déduire une information de mesure de distance,
- dans une étape de transmission de l'information de mesure de distance :
à chaque impulsion ou paquet d'impulsions, à transmettre au dispositif de gestion (2, 2') électronique, la ou les informations de mesure de distance,
- dans une étape de traitement de la ou des informations de mesure de distance et de restitution du résultat de succès ou d'échec d'unicité de passage :
à analyser et traiter, à l'aide du dispositif de gestion (2, 2') électronique, la ou les informations de mesure de distance pour définir un ou des profils de passage de la ou des cibles, puis à déterminer, sur la base du ou desdits profils de passage, si le passage est conforme et unitaire ou non et à restituer, à l'aide du moyen de restitution, le résultat de succès ou d'échec d'unicité de passage,
procédé **caractérisé en ce qu'**il consiste, dans l'étape de détection, à effectuer les mesures de distance sur deux côtés opposés de la cible concernée,
et **en ce qu'**il consiste, à partir, d'une part, du au moins un appareil (1a, 1b, 1c, 1d) du premier ensemble de mesure, dit premier appareil, situé en vis-à-vis, sensiblement à la même hauteur et/ou dans le même axe de rayonnement que le ou l'un des appareils (1'a, 1'b, 1'c, 1'd), dit deuxième appareil, du deuxième ensemble de mesure (1') et, d'autre part, d'une valeur de distance D prédéterminée correspondant à la distance entre lesdits premier et deuxième appareils, selon l'équation ci-après, ladite valeur de distance D et ladite équation étant stockées dans une mémoire du dispositif de gestion (2, 2'),
- dans l'étape de détection : à mesurer simultanément, à l'aide du premier appareil (1a, 1b, 1c, 1d), une première valeur de distance D1, formant une première information de mesure de distance, entre celui-ci et un premier point de la cible (C) et, à l'aide du deuxième appareil (1'a, 1'b, 1'c, 1'd), une deuxième valeur de distance D2, formant une deuxième information de mesure de distance, entre ce dernier et un deuxième point de la cible (C) situé sur le côté de la cible (C) opposé au premier point,
- dans l'étape de transmission de l'information de mesure de distance : à transmettre lesdites première et deuxième informations de mesure de distance au dispositif de gestion,
- dans l'étape de traitement : à calculer, à partir desdites informations de mesure de distance, la valeur de l'épaisseur E dans l'équation E = D - (D1 + D2) formant une information de l'épaisseur de la cible, puis à déterminer, à partir des information de mesure de distance et d'épaisseur de la cible (C) ainsi calculées, si le passage est conforme et unitaire ou non.

2. Procédé, selon la revendication 1, **caractérisé en ce qu'**il consiste, dans l'étape de mesure de distance, à effectuer des mesures de distance, sur au moins deux hauteurs différentes.

3. Procédé selon l'une quelconque des revendications 1 à 2, **caractérisé en ce qu'**il consiste, dans une étape préalable à l'étape de détection, dans le cas d'une zone de passage (Z) consistant en une ouverture de porte ou de porte de sas de sécurité,
- à déclencher les étapes de contrôle de l'unicité de passage lors de l'ouverture de la porte,
- à restituer le résultat de succès d'unicité uniquement lorsque la porte est fermée,
- dans le cas d'un échec d'unicité, à restituer le résultat soit une fois que la porte est fermée, soit avant sa fermeture.

4. Procédé selon l'une quelconque des revendications 1 à 3, **caractérisé en ce qu'**il consiste, dans une étape préalable à l'étape de détection, dans le cas d'une zone de passage (Z) consistant en un couloir, éventuellement avec porte maintenue ouverte :
- préalablement à l'étape de détection et de mesures, dans une étape de contrôle d'accès, au moyen d'un dispositif de contrôle d'accès, à authentifier la cible,
- puis à traiter l'authentification pour envoyer une information de succès ou d'échec de l'authentification au dispositif de contrôle d'unicité de passage, puis :
• en cas de succès, à déclencher les étapes de contrôle de l'unicité de passage,
• en cas d'échec, à émettre une alarme sans déclencher les étapes de contrôle de l'unicité de passage.

5. Système de contrôle de l'unicité de passage d'au moins une cible (C) dans ou à travers une zone de passage (Z) à contrôler, telle qu'une ouverture de porte ou un passage de couloir, dans un bâtiment ou édifice, ledit système permettant la mise en œuvre du procédé selon l'une quelconque des revendications 1 à 4 et comprenant :
- deux ensembles de mesure (1, 1') disposés en vis-à-vis de chaque côté de ladite zone de passage (Z) en travers de cette dernière, à savoir un premier ensemble (1) et un deuxième ensemble (1'), comprenant chacun au moins un appareil (1a, 1b, 1c, 1d, 1'a, 1'b, 1'c, 1'd) de mesure de distance capable d'émettre, dans ladite zone de passage et à une hauteur déterminée, un rayonnement électromagnétique selon un train d'impulsions de fréquence (fl, f2) déterminée et de détecter ledit rayonnement renvoyé par la cible (C), pour en déduire une information de mesure de distance entre ledit appareil et ladite cible (C), le ou chaque appareil (1a, 1b, 1c, 1d) du premier ensemble de mesure (1) étant orienté de sorte à pouvoir émettre le rayonnement vers le deuxième ensemble (1'),
- au moins un dispositif de gestion (2, 2') électronique apte et destiné à traiter les informations de mesure de distance provenant du ou de chaque appareil en vue de déterminer le résultat de succès ou d'échec d'unicité de passage,
- des moyens de restitution (4, 4') dudit résultat de succès ou d'échec d'unicité de passage,
- des moyens d'alimentation en énergie,
- un dispositif de fixation (3, 3') pour positionner fonctionnellement ledit système dans la zone de passage (Z) à couvrir,
**caractérisé en ce que** le ou au moins l'un des appareils (la, lb, 1c, 1d) du premier ensemble de mesure (1), dit premier appareil, est situé sensiblement à la même hauteur que et/ou dans l'axe de rayonnement que/de le ou l'un des appareils (1'a, 1'b, 1'c, 1'd), dit deuxième appareil, du deuxième ensemble de mesure (1'),
**en ce que** le dispositif de gestion (2, 2') comprend des instructions de calcul selon l'équation E = D - (D1 + D2) où
E représente la valeur de l'épaisseur,
D représente la valeur de la distance mesurée entre le premier appareil (1a, 1b, 1c, 1d) et le deuxième appareil (1'a, 1'b, 1'c, 1'd), ladite valeur de distance D étant stockée dans le dispositif de gestion (2, 2') préalablement au déclenchement des étapes de contrôle de l'unicité de passage,
D1 représente une première valeur de distance mesurée entre le premier appareil (1a, 1b, 1c, 1d) et un premier point de la cible (C) sur ladite ligne, à une hauteur déterminée,
D2 représente une deuxième valeur de distance mesurée entre le deuxième appareil (1'a, 1'b, 1'c, 1'd) et un deuxième point de la cible (C) situé sur ladite ligne et sur le côté de la cible (C) opposé au premier point,
le dispositif de gestion (2, 2') permettant de déterminer, à partir des informations de mesure de distance et d'épaisseur de la cible (C) ainsi calculées, si le passage est conforme et unitaire ou non,
le système étant **caractérisé en outre par** au moins une des options suivantes: le ou chaque appareil (1a, 1b, 1c, 1d, 1'a, 1'b, 1'c, 1'd) consiste en un télémètre laser ou une caméra, de préférence une caméra temps de vol,et/ou le dispositif de gestion (2, 2') comprend au moins une carte de gestion (2, 2') électronique reliée fonctionnellement au ou à au moins l'un des ensembles de mesure (1, 1') et au moins une mémoire intégrée dans ladite carte de gestion ou reliée fonctionnellement à cette dernière, la ou au moins l'une desdites mémoires stockant des instructions de traitement et/ou des paramètres de fonctionnement et/ou des fichiers de fonctionnement et/ou les informations de mesure de distance ou autres données à traiter en vue de définir ledit résultat.

6. Système, selon la revendication 5, **caractérisé en ce que**, afin de déterminer des mesures de distance et d'épaisseur sur au moins deux hauteurs différentes, de préférence trois ou quatre hauteurs différentes :
- les deux ensembles de mesure (1, 1') disposés en vis-à-vis comprennent chacun au moins deux appareils (1a, 1b, 1c, 1d, 1'a, 1'b, 1'c, 1'd), de préférence trois ou quatre appareils, alignés successivement le long d'un axe vertical sur au moins deux hauteurs différentes, de préférence trois ou quatre hauteurs différentes et de sorte que lesdits appareils (1a, 1b, 1c, 1d) d'un ensemble de mesure (1) soient situés en vis-à-vis des appareils (1'a, 1'b, 1'c, 1'd) de l'autre ensemble (1').

7. Système, selon l'une quelconque des revendications 5 à 6, **caractérisé en ce que** le ou chaque appareil (1a, 1b, 1c, 1d, 1'a, 1'b, 1'c, 1'd) comprend un émetteur apte et destiné à émettre les impulsions d'ondes électromagnétiques, selon la fréquence (f1, f2) déterminée, sur un point d'une cible (C) et un capteur apte à recevoir le rayonnement électromagnétique réfléchi par un point de la cible (C) et à transmettre l'information de mesure de distance au dispositif de gestion (2, 2') auquel il est relié fonctionnellement.

8. Système, selon l'une quelconque des revendications 5 à 7, **caractérisé en ce qu'**il comprend en outre au moins un haut-parleur (4) permettant de communiquer ou restituer sous une forme sonore le résultat de succès ou d'échec d'unicité de passage.

9. Système, selon l'une quelconque des revendications 5 à 8, **caractérisé en ce que** le dispositif de fixation (3, 3') comprend au moins un ensemble de fixation, chaque ensemble de mesure (1, 1') étant associé au ou à un ensemble de fixation (3, 3') pour permettre sa fixation et son agencement, le ou chaque ensemble de fixation (1, 1') comprenant un profilé essentiellement droit, dit profilé support (3a, 3'a), s'étendant longitudinalement le long d'un axe longitudinal, ledit profilé support (3a, 3'a) comprenant un logement (30a, 30'a) s'étendant le long dudit axe longitudinal et recevant le ou les appareils (1a, 1b, 1c, 1d, 1'a, 1'b, 1'c, 1'd) de l'ensemble de mesure (1, 1') associé.

10. Système, selon la revendication 9, **caractérisé en ce que** le logement (30a, 30'a) est fermé par un cache (3b, 3'b) formant l'une des faces longitudinales, dite face avant, du profilé, ledit cache est apte et destinée à laisser passer les ondes électromagnétiques émises par le ou les appareils (1a, 1b, 1c, 1d, 1'a, 1'b, 1'c, 1'd) tout en masquant visuellement, notamment, ces derniers.

11. Système, selon l'une quelconque des revendications 9 à 10, **caractérisé en ce qu'**il comprend en outre au moins une bande lumineuse (5, 5') comportant une pluralité de Leds (50, 50'), réparties sur une rangée, la ou au moins l'une desdites bandes lumineuse (5, 5') étant fixée dans le logement (30a, 30'a) du profilé support, le ou au moins l'un des profilés support (3'a, 3'a) comportant une ouverture (31a, 31'a) traversante située en regard de ladite bande lumineuse (5, 5') permettant à la lumière émise par les Leds d'être diffusée à travers le profilé support (3a, 3'a).

12. Système, selon l'une quelconque des revendications 10 à 11, **caractérisé en ce que** le ou au moins l'un des ensembles de fixation comprend en outre un profilé additionnel, dit profilé équipement (3c, 3'c), essentiellement droit apte et destiné à être disposé dans le logement (30a, 30'a) du profilé support (3a, 3'a) pour former dans ce dernier un support amovible et/ou mobile permettant de supporter le ou l'un des ensembles de mesure (1, 1') et **en ce que** ledit ensemble de fixation comprend des moyens de déplacement par translation (30c, 32a ou 30'c, 32'a) et/ou des moyens de déplacement angulairement, permettant audit profilé équipement (3c, 3'c) d'être mobile, dans ledit logement (30a, 30'a), respectivement en translation le long de l'axe longitudinal et/ou angulairement par rapport au profilé support (3a, 3'a) de sorte à pouvoir régler ou ajuster la position axiale du ou des appareils (1a, 1b, 1c, 1d, 1'a, 1'b, 1'c, 1'd) et leur orientation angulaire.

13. Système, selon l'une quelconque des revendications 5 à 12, **caractérisé en ce que** au moins l'un des ensembles de mesure (1, 1') comprend au moins un appareil (1d, 1'd) de mesure additionnel, dit appareil additionnel, associé avec le ou au moins l'un des autres appareils (1a, 1b, 1c, 1'a, 1'b, 1'c) en étant alignés sur le même axe et **en ce que** le ou chaque appareil (1d, 1'd) additionnel est monté en opposition, c'est-à-dire orienté sur ledit axe en étant tourné de 180° par rapport à l'appareil (1a, 1b, 1c, 1'a, 1'b, 1'c) associé, afin de pouvoir effectuer ou connaître, par le traitement des signaux de mesure provenant des deux appareils montés en opposition un comptage et/ou du passage de la ou des cibles et/ou le sens du passage de la cible.

14. Dispositif de zone de passage équipé d'un système de contrôle de l'unicité de passage, ledit dispositif comprenant une zone de passage (Z) à contrôler telle qu'une ouverture de porte ou un passage de couloir, dans un bâtiment ou édifice, **caractérisé en ce que** le système de contrôle permet de contrôler l'unicité de passage dans ladite zone de passage (Z) et consiste en un système de contrôle selon l'une quelconque des revendications 5 à 13.

15. Dispositif de zone de passage, selon la revendication 14, **caractérisé en ce que** la zone de passage consiste en une ouverture de porte, ledit dispositif comprenant un cadre dormant (6) entourant ladite ouverture de porte et comprenant deux côtés opposés, à savoir un premier côté (6a) et un second côté (6b), et un battant monté pivotant, par l'intermédiaire de paumelles (6c, 6d, 6e), sur le second côté et **en ce que** le ou chaque ensemble de fixation tel que défini dans la revendication 11 est fixé sur le premier ou second côté (6a, 6b) ou est intégré dans, ou forme, ce dernier.

## Patentansprüche

1. Verfahren zur Kontrolle der Einzelpassage wenigstens eines Ziels (C) in einem oder durch einen zu kontrollierenden Passagebereich (Z), wie eine Türöffnung oder einen Korridordurchgang, in einem Gebäude oder Bauwerk, welches darin besteht, anhand eines Systems zur Kontrolle der Einzelpassage, umfassend einerseits zwei einander gegenüberliegende Messanordnungen (1, 1'), die beiderseits des Passagebereichs quer zu diesem Letzteren angeordnet sind, nämlich eine erste Messanordnung (1) und eine zweite Messanordnung (1'), die jeweils wenigstens ein Gerät (1a, 1b, 1c, 1d, 1'a, 1'b, 1'c, 1'd) zur Abstandsmessung umfassen, das geeignet und dazu bestimmt ist, in dem Passagebereich und auf einer bestimmten Höhe eine elektromagnetische Strahlung auszusenden und die von dem Ziel (C) zurückgesendete Strahlung zu detektieren, wobei das oder jedes Gerät der ersten Messanordnung (1) so ausgerichtet ist, dass es eine Strahlung in Richtung der zweiten Messanordnung (1') aussendet, und andererseits eine elektronische Verwaltungsvorrichtung (2, 2'), die geeignet und dazu bestimmt ist, die von dem oder jedem Gerät stammenden Informationen der Abstandsmessung mit dem Ziel zu verarbeiten, ein Ergebnis von Erfolg oder Misserfolg einer Einzelpassage zu definieren, und Mittel zur Wiedergabe des von der elektronischen Verwaltungsvorrichtung bestimmten Ergebnisses,
die folgenden Schritte zur Kontrolle der Einzelpassage auszulösen:
- in einem Schritt der Abstandsmessung:
in dem Passagebereich (Z), mithilfe des oder jedes Gerätes (1a, 1b, 1c, 1d, 1'a, 1'b, 1'c, 1'd), eine elektromagnetische Strahlung gemäß einer Impulsfolge mit einer bestimmten Frequenz (f1, f2) auszusenden,
mittels des oder jedes Gerätes (1a, 1b, 1c, 1d, 1'a, 1'b, 1'c, 1'd) die elektromagnetische Strahlung zu detektieren, die von diesem Letzteren ausgesendet und von einem Punkt des Ziels (C) reflektiert wurde, um einen Abstand zwischen dem Gerät und dem Ziel (C) zu messen und daraus eine Information der Abstandsmessung abzuleiten,
- in einem Schritt der Übertragung der Information der Abstandsmessung:
bei jedem Impuls oder Impulspaket die Information oder die Informationen der Abstandsmessung an die elektronische Verwaltungsvorrichtung (2, 2') zu übertragen,
- in einem Schritt der Verarbeitung der Information oder der Informationen der Abstandsmessung und der Wiedergabe des Ergebnisses von Erfolg oder Misserfolg der Einzelpassage:
mithilfe der elektronischen Verwaltungsvorrichtung (2, 2') die Information oder die Informationen der Abstandsmessung zu analysieren und zu verarbeiten, um ein Passageprofil oder Passageprofile des Ziels oder der Ziele zu definieren, und danach auf der Basis des Passageprofils oder der Passageprofile zu bestimmen, ob die Passage konform und eine Einzelpassage ist oder nicht, und mithilfe des Wiedergabemittels das Ergebnis von Erfolg oder Misserfolg der Einzelpassage wiederzugeben,
wobei das Verfahren **dadurch gekennzeichnet ist, dass** es darin besteht, im Schritt der Detektion die Abstandsmessungen auf zwei gegenüberliegenden Seiten des betreffenden Ziels durchzuführen,
und dadurch, dass es darin besteht, anhand von einerseits wenigstens einem Gerät (1a, 1b, 1c, 1d) der ersten Messanordnung, erstes Gerät genannt, das sich gegenüber, im Wesentlichen auf derselben Höhe und/oder in derselben Strahlungsachse wie das oder eines der Geräte (1'a, 1'b, 1'c, 1'd), zweites Gerät genannt, der zweiten Messanordnung (1') befindet, und andererseits von einem vorbestimmten Abstandswert D, der dem Abstand zwischen dem ersten und dem zweiten Gerät entspricht, gemäß der nachfolgenden Gleichung, wobei der Abstandswert D und die Gleichung in einem Speicher der Verwaltungsvorrichtung (2, 2') gespeichert sind,
- im Schritt der Detektion: gleichzeitig mithilfe des ersten Geräts (1a, 1b, 1c, 1d) einen ersten Abstandswert D1, der eine erste Information der Abstandsmessung zwischen diesem und einem ersten Punkt des Ziels (C) darstellt, und mithilfe des zweiten Geräts (1'a, 1'b, 1'c, 1'd) einen zweiten Abstandswert D2, der eine zweiten Information der Abstandsmessung zwischen diesem Letzteren und einem zweiten Punkt des Ziels (C) darstellt, der sich auf der zum ersten Punkt entgegengesetzten Seite des Ziels (C) befindet, zu messen,
- im Schritt der Übertragung der Information der Abstandsmessung: die erste und die zweite Information der Abstandsmessung an die Verwaltungsvorrichtung zu übertragen,
- im Schritt der Verarbeitung: aus den Informationen der Abstandsmessung den Wert der Dicke E in der Gleichung E = D - (D1 + D2) zu berechnen, der eine Information über die Dicke des Ziels darstellt, und danach aus den so berechneten Informationen der Abstandsmessung und der Dicke des Ziels (C) zu bestimmen, ob die Passage konform und eine Einzelpassage ist oder nicht.

2. Verfahren nach Anspruch 1, **dadurch gekennzeichnet, dass** es darin besteht, im Schritt der Abstandsmessung Abstandsmessungen auf wenigstens zwei verschiedenen Höhen durchzuführen.

3. Verfahren nach einem der Ansprüche 1 bis 2, **dadurch gekennzeichnet, dass** es darin besteht, in einem dem Schritt der Detektion vorausgehenden Schritt im Falle eines Passagebereichs (Z), der in einer Türöffnung oder Sicherheitsschleusen-Türöffnung besteht,
- die Schritte der Kontrolle der Einzelpassage beim Öffnen der Tür auszulösen,
- das Ergebnis von Erfolg der Einzelpassage nur wiederzugeben, wenn die Tür geschlossen ist,
- im Falle eines Misserfolgs der Einzelpassage das Ergebnis entweder wiederzugeben, sobald die Tür geschlossen ist, oder vor ihrer Schließung.

4. Verfahren nach einem der Ansprüche 1 bis 3, **dadurch gekennzeichnet, dass** es darin besteht, in einem dem Schritt der Detektion vorausgehenden Schritt im Falle eines Passagebereichs (Z), der in einem Korridor besteht, eventuell mit einer offen gehaltenen Tür:
- vor dem Schritt der Detektion und der Messungen in einem Schritt der Zugangskontrolle mittels einer Vorrichtung zur Zugangskontrolle das Ziel zu authentifizieren,
- danach die Authentifizierung zu verarbeiten, um eine Information über Erfolg oder Misserfolg der Authentifizierung an die Vorrichtung zur Kontrolle der Einzelpassage zu senden, danach:
• im Falle eines Erfolgs die Schritte zur Kontrolle der Einzelpassage auszulösen,
• im Falle eines Misserfolgs einen Alarm auszusenden, ohne die Schritte zur Kontrolle der Einzelpassage auszulösen.

5. System zur Kontrolle der Einzelpassage wenigstens eines Ziels (C) in einem oder durch einen zu kontrollierenden Passagebereich (Z), wie eine Türöffnung oder einen Korridordurchgang, in einem Gebäude oder Bauwerk, wobei das System die Durchführung des Verfahrens nach einem der Ansprüche 1 bis 4 ermöglicht und umfasst:
- zwei Messanordnungen (1, 1'), die einander gegenüber beiderseits des Passagebereichs (Z) quer zu diesem Letzteren angeordnet sind, nämlich eine erste Anordnung (1) und eine zweite Anordnung (1'), die jeweils wenigstens ein Gerät (1a, 1b, 1c, 1d, 1'a, 1'b, 1'c, 1'd) zur Abstandsmessung umfassen, das in der Lage ist, in dem Passagebereich und auf einer bestimmten Höhe eine elektromagnetische Strahlung gemäß einer Impulsfolge mit einer bestimmten Frequenz (f1, f2) auszusenden und die von dem Ziel (C) zurückgesendete Strahlung zu detektieren, um daraus eine Information der Abstandsmessung zwischen dem Gerät und dem Ziel (C) abzuleiten, wobei das oder jedes Gerät (1a, 1b, 1c, 1d) der ersten Messanordnung (1) so ausgerichtet ist, dass es die Strahlung in Richtung der zweiten Messanordnung (1') aussenden kann,
- wenigstens eine elektronische Verwaltungsvorrichtung (2, 2'), die geeignet und dazu bestimmt ist, die von dem oder jedem Gerät stammenden Informationen der Abstandsmessung mit dem Ziel zu verarbeiten, das Ergebnis von Erfolg oder Misserfolg der Einzelpassage zu bestimmen,
- Mittel zur Wiedergabe (4, 4') des Ergebnisses von Erfolg oder Misserfolg der Einzelpassage,
- Mittel zur Energieversorgung,
- eine Befestigungsvorrichtung (3, 3'), um das System in dem abzudeckenden Passagebereich (Z) funktional zu positionieren,
**dadurch gekennzeichnet, dass** das oder wenigstens eines der Geräte (1a, 1b, 1c, 1d) der ersten Messanordnung (1), erstes Gerät genannt, sich im Wesentlichen auf derselben Höhe wie und/oder in der Strahlungsachse wie das oder eines der Geräte (1'a, 1'b, 1'c, 1'd), zweites Gerät genannt, der zweiten Messanordnung (1') befindet,
und dadurch, dass die Verwaltungsvorrichtung (2, 2') Anweisungen zur Berechnung gemäß der Gleichung E = D - (D1 + D2) umfasst, wobei
E den Wert der Dicke bezeichnet,
D den Wert des Abstands bezeichnet, der zwischen dem ersten Gerät (1a, 1b, 1c, 1d) und dem zweiten Gerät (1'a, 1'b, 1'c, 1'd) gemessen wird, wobei der Abstandswert D vor der Auslösung der Schritte zur Kontrolle der Einzelpassage in der Verwaltungsvorrichtung (2, 2') gespeichert wird,
D1 einen ersten Abstandswert bezeichnet, der zwischen dem ersten Gerät (1a, 1b, 1c, 1d) und einem ersten Punkt des Ziels (C) auf der besagten Linie auf einer bestimmten Höhe gemessen wird,
D2 einen zweiten Abstandswert bezeichnet, der zwischen dem zweiten Gerät (1'a, 1'b, 1'c, 1'd) und einem zweiten Punkt des Ziels (C), der sich auf der besagten Linie und auf der zum ersten Punkt entgegengesetzten Seite des Ziels (C) befindet, gemessen wird,
wobei die Verwaltungsvorrichtung (2, 2') ermöglicht, aus den so berechneten Informationen der Abstandsmessung und der Dicke des Ziels (C) zu bestimmen, ob die Passage konform und eine Einzelpassage ist oder nicht,
wobei das System außerdem durch wenigstens eine der folgenden Optionen gekennzeichnet ist:
das oder jedes Gerät (1a, 1b, 1c, 1d, 1'a, 1'b, 1'c, 1'd) besteht aus einem Laserentfernungsmesser oder einer Kamera, vorzugsweise einer TOF-Kamera, und/oder die Verwaltungsvorrichtung (2, 2') umfasst wenigstens eine elektronische Verwaltungskarte (2, 2'), die funktional mit der oder mit wenigstens einer der Messanordnungen (1, 1') verbunden ist, und wenigstens einen Speicher, der in die Verwaltungskarte integriert ist oder funktional mit dieser Letzteren verbunden ist, wobei der oder wenigstens einer der Speicher Verarbeitungsanweisungen und/oder Betriebsparameter und/oder Betriebsdateien und/oder die Informationen der Abstandsmessung oder andere Daten speichert, die mit dem Ziel zu verarbeiten sind, das Ergebnis zu definieren.

6. System nach Anspruch 5, **dadurch gekennzeichnet, dass**, um Abstands- und Dickenmessungen auf wenigstens zwei verschiedenen Höhen, vorzugsweise drei oder vier verschiedenen Höhen zu bestimmen: - die zwei einander gegenüber angeordneten Messanordnungen (1, 1') jeweils wenigstens zwei Geräte (1a, 1b, 1c, 1d, 1'a, 1'b, 1'c, 1'd), vorzugsweise drei oder vier Geräte umfassen, die nacheinander entlang einer vertikalen Achse auf wenigstens zwei verschiedenen Höhen, vorzugsweise drei oder vier verschiedenen Höhen angeordnet sind, und derart, dass sich die Geräte (1a, 1b, 1c, 1d) einer Messanordnung (1) gegenüber den Geräten (1'a, 1'b, 1'c, 1'd) der anderen Anordnung (1') befinden.

7. System nach einem der Ansprüche 5 bis 6, **dadurch gekennzeichnet, dass** das oder jedes Gerät (1a, 1b, 1c, 1d, 1'a, 1'b, 1'c, 1'd) einen Sender umfasst, der geeignet und dazu bestimmt ist, die Impulse elektromagnetischer Wellen gemäß der bestimmten Frequenz (f1, f2) an einen Punkt eines Ziels (C) auszusenden, und einen Empfänger, der geeignet ist, die von einem Punkt des Ziels (C) reflektierte elektromagnetische Strahlung zu empfangen und die Information der Abstandsmessung an die Verwaltungsvorrichtung (2, 2') zu übertragen, mit der er funktional verbunden ist.

8. System nach einem der Ansprüche 5 bis 7, **dadurch gekennzeichnet, dass** es außerdem wenigstens einen Lautsprecher (4) umfasst, der es ermöglicht, das Ergebnis von Erfolg oder Misserfolg einer Einzelpassage in einer akustischen Form zu übermitteln oder wiederzugeben.

9. System nach einem der Ansprüche 5 bis 8, **dadurch gekennzeichnet, dass** die Befestigungsvorrichtung (3, 3') wenigstens eine Befestigungsanordnung umfasst, wobei jede Messanordnung (1, 1') der oder einer Befestigungsanordnung (3, 3') zugeordnet ist, um ihre Befestigung und ihre Anordnung zu ermöglichen, wobei die oder jede Befestigungsanordnung (1, 1') ein im Wesentlichen gerades Profil umfasst, Trägerprofil (3a, 3'a) genannt, das sich in Längsrichtung entlang einer Längsachse erstreckt, wobei das Trägerprofil (3a, 3'a) eine Aufnahme (30a, 30'a) umfasst, die sich entlang der Längsachse erstreckt und das oder die Geräte (1a, 1b, 1c, 1d, 1'a, 1'b, 1'c, 1'd) der zugeordneten Messanordnung (1, 1') aufnimmt.

10. System nach Anspruch 9, **dadurch gekennzeichnet, dass** die Aufnahme (30a, 30'a) von einer Abdeckung (3b, 3'b) verschlossen wird, die eine der Längsseiten, Vorderseite genannt, des Profils bildet, wobei die Abdeckung geeignet und dazu bestimmt ist, die elektromagnetischen Wellen durchzulassen, die von dem oder den Geräten (1a, 1b, 1c, 1d, 1'a, 1'b, 1'c, 1'd) ausgesendet werden, und dabei diese Letzteren zu maskieren, insbesondere visuell.

11. System nach einem der Ansprüche 9 bis 10, **dadurch gekennzeichnet, dass** es außerdem wenigstens ein Lichtband (5, 5') umfasst, das mehrere LEDs (50, 50') aufweist, die auf einer Reihe verteilt sind, wobei das oder wenigstens eines der Lichtbänder (5, 5') in der Aufnahme (30a, 30'a) des Trägerprofils befestigt ist, wobei das oder wenigstens eines der Trägerprofile (3'a, 3'a) eine gegenüber dem Lichtband (5, 5') befindliche Durchgangsöffnung (31a, 31'a) aufweist, welche ermöglicht, dass das von den LEDs ausgesendete Licht durch das Trägerprofil (3a, 3'a) hindurch gestreut wird.

12. System nach einem der Ansprüche 10 bis 11, **dadurch gekennzeichnet, dass** die oder wenigstens eine der Befestigungsanordnungen außerdem ein im Wesentlichen gerades zusätzliches Profil, Ausrüstungsprofil (3c, 3'c) genannt, umfasst, das geeignet und dazu bestimmt ist, in der Aufnahme (30a, 30'a) des Trägerprofils (3a, 3'a) angeordnet zu werden, um in diesem Letzteren einen lösbaren und/oder beweglichen Träger zu bilden, der es ermöglicht, die oder eine der Messanordnungen (1, 1') zu tragen, und dadurch, dass die Befestigungsanordnung Mittel zur Verlagerung durch Translation (30c, 32a oder 30'c, 32'a) und/oder Mittel zur Winkelverlagerung umfasst, welche ermöglichen, dass das Ausrüstungsprofil (3c, 3'c) in der Aufnahme (30a, 30'a) translatorisch entlang der Längsachse bzw. winkelmäßig in Bezug auf das Trägerprofil (3a, 3'a) so beweglich ist, dass die axiale Position des oder der Geräte (1a, 1b, 1c, 1d, 1'a, 1'b, 1'c, 1'd) und ihre Winkelausrichtung geregelt oder eingestellt werden können.

13. System nach einem der Ansprüche 5 bis 12, **dadurch gekennzeichnet, dass** wenigstens eine der Messanordnungen (1, 1') wenigstens ein zusätzliches Messgerät (1d, 1'd) umfasst, zusätzliches Gerät genannt, das dem oder wenigstens einem der anderen Geräte (1a, 1b, 1c, 1'a, 1'b, 1'c) zugeordnet ist, wobei es nach derselben Achse ausgerichtet ist, und dadurch, dass das oder jedes zusätzliche Gerät (1d, 1'd) entgegengesetzt angebracht ist, das heißt nach der Achse ausgerichtet ist und dabei in Bezug auf das zugeordnete Gerät (1a, 1b, 1c, 1'a, 1'b, 1'c) um 180° gedreht ist, um durch die Verarbeitung der von den zwei entgegengesetzt angebrachten Geräten stammenden Messsignale eine Zählung der Passage des oder der Ziele und/oder der Richtung der Passage des Ziels durchführen oder erfahren zu können.

14. Passagebereichsvorrichtung, die mit einem System zur Kontrolle der Einzelpassage ausgestattet ist, wobei die Vorrichtung einen zu kontrollierenden Passagebereich (Z), wie eine Türöffnung oder einen Korridordurchgang, in einem Gebäude oder Bauwerk umfasst, **dadurch gekennzeichnet, dass** das System zur Kontrolle ermöglicht, die Einzelpassage in dem Passagebereich (Z) zu kontrollieren, und aus einem System zur Kontrolle nach einem der Ansprüche 5 bis 13 besteht.

15. Passagebereichsvorrichtung nach Anspruch 14, **dadurch gekennzeichnet, dass** der Passagebereich aus einer Türöffnung besteht, wobei die Vorrichtung einen Zargenrahmen (6) umfasst, der die Türöffnung umgibt und zwei einander gegenüberliegende Seiten, nämlich eine erste Seite (6a) und eine zweite Seite (6b), und einen Türflügel, der über Scharniere (6c, 6d, 6e) auf der zweiten Seite schwenkbar gelagert ist, umfasst, und dadurch, dass die oder jede Befestigungsanordnung, wie in Anspruch 11 definiert, auf der ersten oder zweite Seite (6a, 6b) befestigt ist oder in diese Letztere integriert ist oder sie bildet.

## Claims

1. Method for monitoring the uniqueness of passage of at least one target (C) in or through a passage zone (Z) to be monitored, such as a door opening or a corridor passage, in a building or edifice, consisting, based on a system for monitoring the uniqueness of passage comprising, on the one hand, two measurement assemblies (1, 1') facing one another disposed on each side of said passage zone across the latter, namely a first measurement assembly (1) and a second measurement assembly (1'), each comprising at least one distance measurement unit (1a, 1b, 1c, 1d, 1'a, 1'b, 1'c, 1'd) that is able and intended to emit, in said passage zone and at a determined height, an electromagnetic radiation and to detect said radiation returned by the target (C), the or each unit of the first measurement assembly (1) being oriented so as to emit a radiation towards the second measurement assembly (1') and, on the other hand, an electronic management device (2, 2') that is able and intended to process the distance measurement information originating from the or each unit in order to define a uniqueness of passage success or failure result and means for rendering said result determined by said electronic management device,
in triggering the following steps for monitoring the uniqueness of passage:
- in a distance measurement step:
in emitting, in said passage zone (Z), using the or each unit (1a, 1b, 1c, 1d, 1'a, 1'b, 1'c, 1'd), an electromagnetic radiation according to a pulse train of determined frequency (f1, f2),
in detecting, by means of the or each unit (1a, 1b, 1c, 1d, 1'a, 1'b, 1'c, 1'd), the electromagnetic radiation emitted by the latter and reflected by a point of the target (C) to measure a distance between said unit and the target C and deduce distance measurement information therefrom,
- in a step of transmission of the distance measurement information:
on each pulse or pulse burst, in transmitting, to the electronic management device (2, 2'), the distance measurement information,
- in a step of processing of the or each distance measurement information and of rendering of the uniqueness of passage success or failure result:
in analysing and processing, using the electronic management device (2, 2'), the or each distance measurement information to define one or more passage profiles of the target or targets, then in determining, on the basis of said passage profile or profiles, whether the passage is conformal and unitary or not and in rendering, using the rendering means, the uniqueness of passage success or failure result,
the method being **characterized in that** it consists, in the detection step, in performing distance measurements on two opposite sides of the target concerned,
and **in that** it consists, on the basis, on the one hand, of the at least one unit (1a, 1b, 1c, 1d) of the first measurement assembly, called first unit, situated facing, substantially at the same height and/or in the same axis of radiation as the or one of the units (1'a, 1'b, 1'c, 1'd), called second unit, of the second measurement assembly (1') and, on the other hand, of a predetermined distance value D corresponding to the distance between said first and second units, according to the equation below, said distance value D and said equation being stored in a memory of the management device (2, 2'),
- in the detection step: in simultaneously measuring, using the first unit (1a, 1b, 1c, 1d), a first distance value D1, forming first distance measurement information, between the latter and a first point of the target (C) and, using the second unit (1'a, 1'b, 1'c, 1'd), a second distance value D2, forming second distance measurement information, between the latter and a second point of the target (C) situated on the side of the target (C) opposite the first point,
- in the step of transmission of the distance measurement information: in transmitting said first and second distance measurement information to the management device,
- in the processing step: in calculating, from said distance measurement information, the value of the thickness E in the equation E = D - (D1 + D2) forming information on the thickness of the target, then in determining, from the distance measurement and target (C) thickness information thus calculated, whether the passage is conformal and unitary or not.

2. Method according to Claim 1, **characterized in that** it consists, in the distance measurement step, in performing distance measurements, on at least two different heights.

3. Method according to either one of Claims 1 and 2, **characterized in that** it consists, in a step prior to the detection step, in the case of a passage zone (Z) consisting of a door or security airlock door opening,
- in triggering the steps of monitoring the uniqueness of passage upon the opening of the door,
- in rendering the uniqueness success result only when the door is closed,
- in the case of uniqueness failure, in rendering the result either once the door is closed, or before it closes.

4. Method according to any one of Claims 1 to 3, **characterized in that** it consists, in a step prior to the detection step, in the case of a passage zone (Z) consisting of a corridor, possibly with a door held open:
- prior to the detection and measurement step, in an access control step, by means of an access control device, in authenticating the target,
- then in processing the authentication to send authentication success or failure information to the uniqueness of passage monitoring device, then:
• in case of success, in triggering the steps of monitoring the uniqueness of passage,
• in case of failure, in emitting an alarm without triggering the steps of monitoring the uniqueness of passage.

5. System for monitoring the uniqueness of passage of at least one target (C) in or through a passage zone (Z) to be monitored, such as a door opening or a corridor passage, in a building or edifice, said system allowing the implementation of the method according to any one of Claims 1 to 4 and comprising:
- two measurement assemblies (1, 1') disposed facing one another on each side of said passage zone (Z) across the latter, namely a first assembly (1) and a second assembly (1'), each comprising at least one distance measurement unit (1a, 1b, 1c, 1d, 1'a, 1'b, 1'c, 1'd) capable of emitting, in said passage zone and at a determined height, an electromagnetic radiation according to a pulse train of determined frequency (f1, f2) and of detecting said radiation returned by the target (C), to deduce distance measurement information between said unit and said target (C) therefrom, the or each unit (1a, 1b, 1c, 1d) of the first measurement assembly (1) being oriented so as to be able to emit the radiation towards the second assembly (1'),
- at least one electronic management device (2, 2') that is able and intended to process the distance measurement information originating from the or each unit in order to determine the uniqueness of passage success or failure result,
- means for rendering (4, 4') said uniqueness of passage success or failure result,
- energy supply means,
- a fixing device (3, 3') for functionally positioning said system in the passage zone (Z) to be covered,
**characterized in that** the or at least one of the units (1a, 1b, 1c, 1d) of the first measurement assembly (1), called first unit, is situated substantially at the same height as and/or in the axis of radiation as the or one of the units (1'a, 1'b, 1'c, 1'd), called second unit, of the second measurement assembly (1'),
**in that** the management device (2, 2') comprises calculation instructions according to the equation E = D - (D1 + D2) in which
E represents the value of the thickness,
D represents the value of the distance measured between the first unit (1a, 1b, 1c, 1d) and the second unit (1'a, 1'b, 1'c, 1'd), said distance value D being stored in the management device (2, 2') prior to the triggering of the steps of monitoring the uniqueness of passage,
D1 represents a first distance value measured between the first unit (1a, 1b, 1c, 1d) and a first point of the target (C) on said line, at a determined height,
D2 represents a second distance value measured between the second unit (1'a, 1'b, 1'c, 1'd) and a second point of the target (C) situated on said line and on the side of the target (C) opposite the first point,
the management device (2, 2') making it possible to determine, from the distance measurement and target (C) thickness information thus calculated, whether the passage is conformal and unitary or not,
the system being further **characterized by** at least one of the following options:
the or each unit (1a, 1b, 1c, 1d, 1'a, 1'b, 1'c, 1'd) consists of a laser range-finder or a camera, preferably a time-of-flight camera, and/or the management device (2, 2') comprises at least one electronic management board (2, 2') linked functionally to the or at least one of the measurement assemblies (1, 1') and at least one memory incorporated in said management board or linked functionally to the latter, the or at least one of said memories storing processing instructions and/or operating parameters and/or operating files and/or distance measurement information or other data to be processed in order to define said result.

6. System according to Claim 5, **characterized in that**, in order to determine distance and thickness measurements on at least two different heights, preferably three or four different heights:
- the two measurement assemblies (1, 1') disposed facing one another each comprise at least two units (1a, 1b, 1c, 1d, 1'a, 1'b, 1'c, 1'd), preferably three or four units, aligned successively along a vertical axis over at least two different heights, preferably three or four different heights and in such a way that said units (1a, 1b, 1c, 1d) of one measurement assembly (1) are situated facing the units (1'a, 1'b, 1'c, 1'd) of the other assembly (1').

7. System according to either one of Claims 5 and 6, **characterized in that** the or each unit (1a, 1b, 1c, 1d, 1'a, 1'b, 1'c, 1'd) comprises an emitter that is able and intended to emit pulses of electromagnetic waves, according to the determined frequency (f1, f2), to a point of a target (C) and a sensor that is able to receive the electromagnetic radiation reflected by a point of the target (C) and to transmit the distance measurement information to the management device (2, 2') to which it is functionally linked.

8. System according to any one of Claims 5 to 7, **characterized in that** it further comprises at least one loudspeaker (4) making it possible to communicate or render, in sound form, the uniqueness of passage success or failure result.

9. System according to any one of Claims 5 to 8, **characterized in that** the fixing device (3, 3') comprises at least one fixing assembly, each measurement assembly (1, 1') being associated with the or one fixing assembly (3, 3') for it to be fixed and arranged, the or each fixing assembly (1, 1') comprising an essentially straight profiled element, called support profiled element (3a, 3'a), extending longitudinally along a longitudinal axis, said support profiled element (3a, 3'a) comprising a recess (30a, 30'a) extending along said longitudinal axis and receiving the unit or units (1a, 1b, 1c, 1d, 1'a, 1'b, 1'c, 1'd) of the associated measurement assembly (1, 1').

10. System according to Claim 9, **characterized in that** the recess (30a, 30'a) is closed by a cover (3b, 3'b) forming one of the longitudinal faces, called front face, of the profiled element, said cover is able and intended to allow the passage of the electromagnetic waves emitted by the unit or units (1a, 1b, 1c, 1d, 1'a, 1'b, 1'c, 1'd) while visually masking, in particular, said units.

11. System according to either one of Claims 9 and 10, **characterized in that** it further comprises at least one light strip (5, 5') comprising a plurality of LEDs (50, 50'), distributed on a row, the or at least one of said light strips (5, 5') being fixed in the recess (30a, 30'a) of the support profiled element, the or at least one of the support profiled elements (3'a, 3'a) comprising a through opening (31a, 31'a) situated facing said light strip (5, 5') allowing the light emitted by the LEDs to be diffused through the support profiled element (3a, 3'a).

12. System according to either one of Claims 10 and 11, **characterized in that** the or at least one of the fixing assemblies further comprises an additional profiled element, called equipment profiled element (3c, 3'c), essentially straight, that is able and intended to be disposed in the recess (30a, 30'a) of the support profiled element (3a, 3'a) to form therein a removable and/or movable support allowing the or one of the measurement assemblies (1, 1') to be supported and **in that** said fixing assembly comprises translational displacement means (30c, 32a or 30'c, 32'a) and/or angular displacement means, allowing said equipment profiled element (3c, 3'c) to be movable, in said recess (30a, 30'a), respectively in translation along the longitudinal axis and/or angularly with respect to the support profiled element (3a, 3'a) so as to be able to set or adjust the axial position of the unit or units (1a, 1b, 1c, 1d, 1'a, 1'b, 1'c, 1'd) and the angular orientation thereof.

13. System according to any one of Claims 5 to 12, **characterized in that** at least one of the measurement assemblies (1, 1') comprises at least one additional measurement unit (1d, 1'd), called additional unit, associated with the or at least one of the other units (1a, 1b, 1c, 1'a, 1'b, 1'c) by being aligned on the same axis and **in that** the or each additional unit (1d, 1'd) is mounted in opposition, that is to say oriented on said axis by being turned by 180° with respect to the associated unit (1a, 1b, 1c, 1'a, 1'b, 1'c), in order to be able to perform or know, by the processing of the measurement signals originating from the two units mounted in opposition, a counting and/or the passage of the target or targets and/or the direction of the passage of the target.

14. Passage zone device equipped with a system for monitoring the uniqueness of passage, said device comprising a passage zone (Z) to be monitored such as a door opening or a corridor passage, in a building or edifice, **characterized in that** the monitoring system makes it possible to monitor the uniqueness of passage in said passage zone (Z) and consists of a monitoring system according to any one of Claims 5 to 13.

15. Passage zone device according to Claim 14, **characterized in that** the passage zone consists of a door opening, said device comprising a frame (6) surrounding said door opening and comprising two opposite sides, namely a first side (6a) and a second side (6b), and a leaf mounted to pivot, via pin hinges (6c, 6d, 6e), on the second side, and **in that** the or each fixing assembly as defined in Claim 11 is fixed onto the first or second side (6a, 6b) or is incorporated in, or forms, the latter.
